(19) Europäisches Patentamt
European Patent Office
Office européen des brevets

(11) **EP 4 656 334 A1**

(12) **EUROPEAN PATENT APPLICATION**

(43) Date of publication:
03.12.2025 Bulletin 2025/49

(21) Application number: 25179102.6

(22) Date of filing: 27.05.2025

(51) International Patent Classification (IPC):
**B25J 9/16** (2006.01)    **G05B 19/416** (2006.01)
**G06N 3/044** (2023.01)    **G06N 3/084** (2023.01)
**G05B 13/02** (2006.01)

(52) Cooperative Patent Classification (CPC):
**B25J 9/1664; B25J 9/161; B25J 9/163;
G05B 13/027; G05B 19/416; G06N 3/044;
G06N 3/045; G06N 3/0464; G06N 3/048;
G06N 3/084; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 31.05.2024 SE 2450589

(71) Applicant: DeLaval Holding AB
147 21 Tumba (SE)

(72) Inventors:
• KHIRZIA, Omed
147 21 Tumba (SE)
• RUGLAND, Christian
147 21 Tumba (SE)
• RYBERG, Simon
147 21 Tumba (SE)

(74) Representative: DeLaval International AB
Intellectual Property Support/Legal Affairs
P.O. Box 39
147 21 Tumba (SE)

(54) **MILKING ROBOT CONTROLLER, METHOD THEREFORE, COMPUTER PROGRAM AND NON-VOLATILE DATA CARRIER**

(57)    A controller (100) controls an end-effector (390) of a milking robot (150) to move to a desired position ($p_{set}$) according to a desired velocity profile via: a feedforward module (110) producing predicted control signal(s) ($c_{pred}$) based on a set vector ($v_{set}$) specifying the desired velocity profile, a closed-loop controller (120), based on a modified position ($\Delta p$), producing primary control signal(s) ($c_{prim}$) for controlling the end-effector (390) to the desired position ($p_{set}$), and first and second summation modules (130; 140) deriving modified control signal(s) ($c_{input}$) to be fed to the milking robot (150) and deriving the modified position ($\Delta p$) respectively. The feedforward module (110) contains a trained artificial neural network with an input layer configured to obtain the set vector ($v_{set}$), an output layer configured to provide the at least one predicted control signal ($c_{pred}$), and a number of hidden layers interconnecting the input layer and the output layer. The respective nodes in said layers have weights that were assigned through a training process in which output signals ($p_{out}$) from the robot (150) were used as training data and registered control signals for controlling the end-effector (390) of the milking robot (150) were used as reference data.

**Fig. 1**

EP 4 656 334 A1

**Description**

TECHNICAL FIELD

The present invention relates generally to milking robot control. Especially, the invention relates to a controller according to the preamble of claim 1 and a corresponding method. The invention also relates to a computer program for executing the method when the program is run on a processing unit, and a non-volatile data carrier storing such a computer program.

BACKGROUND

The milking robots of today's milking installations are confronted with several challenges. A strict regulatory framework must be adhered to regarding human and animal safety, e.g. with respect to speed limitations and restricted areas. The equipment must also endure a very harsh environment, for example in terms of dirt, humidity, and large temperature variations. Further, for efficiency reasons, the milking robot shall be capable of operating with quick and accurate movements, for instance to attach and detach teat-cups and perform various cleaning tasks.

Traditionally the robot arm of the milking robot has been controlled by a closed-loop regulator, e.g. operating according to a proportional-integral-derivative (PID) regulation principle. This may be problematic since the robot arm is a system with many uncertain variables and non-linear components. For example, the robot arm may be actuated by hydraulic cylinders which, as such, are difficult to model, inter alia due to the fact that the characteristics of the hydraulic oil varies with respect to temperature in a complex manner, and the relationship between the electro-hydraulic actuator's control current and the resulting movement of the joint/arm controlled by the electro-hydraulic actuator is typically non-linear.

Scientific studies have evaluated various alternatives to the above closed-loop control of industrial robots.

The article R. Zhou, C. Hu, B. Hou and Y. Zhu, "Comparative study of performance-oriented feedforward compensation strategies for precision mechatronic motion systems," IEEE Access, vol. 10, pp. 100 812-100 823, 2022. doi: 10.1109/ACCESS.2022.3207162 presents an overview on state-of-the-art feedforward compensation strategies including standard ILC, CILC, GRU-FFC and RIC methods.

The article R. Mukhopadhyay, R. Chaki, A. Sutradhar, and P. Chat-topadhyay, "Model learning for robotic manipulators using recurrent neural networks," in TENCON 2019 - 2019 IEEE Region 10 Conference (TENCON), 2019, pp. 2251-2256. doi: 10.1109/ TENCON.2019.8929622 investigates the reliability of the traditional analytical model building techniques for robotic manipulators with higher Degrees of Freedom (DoF) under dynamic, uncertain environments. Keeping these uncertainties and inaccuracies in the backdrop, the authors were encouraged to use supervised machine learning techniques as a better alternative for data-driven model learning. The main advantage of data driven models lies in their adaptability to cope with the model variations in real-time. Considering the proven superiority of the Recurrent Neural Networks (RNN) family in sequence modelling, this paper projects three members of this family, namely Simple RNN (SRNN), Long Short-Term Memory (LSTM) and Gated Recurrent Unit (GRU) as promising candidates for Robotic manipulator model learning tasks. Simulation results obtained by using some publicly available data sets of KUKA LWR and SARCOS Robot Arm with 7-DoF, clearly show that model learning performance of both LSTM and GRU are better than other classical regression-based techniques.

The article S. Chen and J. T. Wen, "Neural-learning trajectory tracking control of flexible-joint robot manipulators with unknown dynamics," in 2019 IEEE/RSJ International Conference on Intelligent Robots and Systems (IROS), 2019, pp. 128-135. doi: 10.1109/ IROS40897. 2019.8968608 studies two approaches to improve the trajectory tracking performance industrial robots through feedforward compensation. The first approach uses iterative learning control, with the gradient-based iterative update generated from the robot forward dynamics model. The second approach uses dynamic inversion to directly compensate for the robot forward dynamics. If the forward dynamics is strictly proper or is nonminimum-phase (e.g., due to time delays), its stable inverse would be non-causal. Both approaches require robot dynamical models. The paper presents results of using recurrent neural networks (RNNs) to approximate these dynamical models - forward dynamics in the first case, inverse dynamics (possibly non-causal) in the second case. The authors use the bi-directional RNN to capture the noncausality. The RNNs are trained based on a collection of commanded trajectories and the actual robot responses. The authors use a Baxter robot to evaluate the two approaches. The Baxter robot exhibits significant joint flexibility due to the series-elastic joint actuators. Both approaches achieve sizable improvement over the uncompensated robot motion, for both random joint trajectories and Cartesian motion. The inverse dynamics method is particularly attractive as it may be used to track a user input more accurately as in teleoperation.

The article S. Xie and J. Ren, "Recurrent-neural-network-based predictive control of piezo actuators for precision trajectory tracking," in 2019 American Control Conference (ACC), 2019, pp. 3795-3800. doi: 10.23919/ACC.2019.8814625 proposes an RNN-based predictive control (RNNPC) approach to achieve accurate real-time trajectory tracking of PEAs. Implementation of RNNPC to a PEA showed that the proposed method can achieve high tracking accuracy when the desired trajectory spanned over a broad frequency range. In addition, anything system which can be modelled by the RNN can be controlled with the proposed.

Thus, there appears to exist other control solutions than the traditional closed-loop regulators for controlling industrial robots, which solutions for example involve feedforward compensation and artificial neural networks. However, there is yet no efficient alternative controller for a milking robot.

SUMMARY

The object of the present invention is therefore to offer an improved solution for controlling a milking robot.

According to one aspect of the invention, the object is achieved by a controller for controlling a milking robot to move an end-effector in at least one dimension to a desired position according to a desired velocity profile. The controller contains a feedforward module, a closed-loop controller, and first and second summation modules. The feedforward module is configured to obtain a set vector specifying the desired velocity profile and based on the set vector produce at least one predicted control signal. The closed-loop controller is configured to obtain a modified position and based thereon produce at least one primary control signal for controlling the end-effector to the desired position. The first summation module is configured to derive at least one modified control signal based on the at least one primary control signal and the at least one predicted control signal, for example by subtracting the former from the latter. The at least one modified control signal is adapted to be fed to the milking robot for controlling the end-effector to the desired position according to the desired velocity profile. As will be discussed below, according to embodiments of the invention, the at least one modified control signal may comprise one or more electrical currents. The second summation module is configured to derive the modified position based on the desired position and at least one output signal from the milking robot, for example by subtracting the former from the latter. Here, the at least one output signal reflects a registered position of the end-effector, which position may have been registered by at least one position sensor, e.g. represented by an optical, magnetic or capacitive encoder or a Hall sensor. The feedforward module, in turn, includes a trained artificial neural network (ANN), for example a recurrent neural network that contains an input layer configured to obtain the set vector and an output layer configured to provide the at least one predicted control signal. A number of hidden layers, for example two to six, or preferably three to four, interconnect the input and output layers. Each of the input, output and hidden layers contains a respective set of nodes, which are connected to nodes to the respective of neighboring layers via a respective weight. These weights have been assigned through a training process in which the at least one output signal was used as training data and registered control signals configured to control the end-effector of the milking robot were used as reference data.

This controller is advantageous because it provides substantially enhanced trajectory tracking in relation to the traditionally controlled milking robot arms. Specifically, it was found that a minimum-square-error (MSE) in the velocity trajectories decreased to less than half in relation to an existing PID-based controller.

According to one embodiment of this aspect of the invention, the weights of the trained ANN have been determined iteratively via a backpropagation training process that involves comparing training data that express the registered control signals with the at least one predicted control signal produced by an ANN under training. Here, the ANN under training will represent the trained ANN after that the training process has been completed.

For reliable convergence and to avoid overtraining, the backpropagation training process preferably includes 400 to 1600 epochs, and more preferably around 800 to 1000 epochs.

According to one embodiment of this aspect of the invention, the desired position and the set vector respectively describe a trajectory to be followed by for the end-effector. The trajectory, in turn, may be defined in a respective separate coordinate system for each joint of the robot arm, The respective coordinate system used for a particular joint may depend on the type of joint. For some joints it may be advantageous to define their movements in Cartesian coordinates, whereas for other joints polar coordinates may be more appropriate.

According to other embodiments of this aspect of the invention, the set vector describes a velocity for the end-effector, where the velocity varies from a start position to the desired position.

For instance, the set vector may describe the velocity of the end-effector such that the end-effector accelerates during a first period from the start position and decelerates towards the desired position during a second period. Further, the set vector may describe a constant velocity for the end-effector during one or more intervals between an expiry of the first period and before a beginning of the second period. Hence, it is possible to define the trajectory very distinctively, and thus attain a highly precise spatio-temporal control of the end-effector.

According to further embodiments of this aspect of the invention, the trained ANN is either implemented by means of a computer program that runs on at least one processing unit, or by at least one neuromorphic circuit. In general, the former alternative may offer a higher degree of flexibility, whereas the latter alternative may be more efficient, for example in terms of latency and overall power consumption.

According to another embodiment of this aspect of the invention, the closed-loop controller is configured to operate according to a PID regulation principle, a linear-quadratic regulation principle or a model predictive control principle. Namely, each of these types of control principles offer specific advantages.

According to yet another embodiment of this aspect of the invention, the at least one modified control signal is adapted to control a milking robot with a robotic arm that has at least three controllable joints. Additionally, the at least one modified control signal may be adapted to control at least one electric motor, at least one electro-hydraulic actuator and/or at least one electro-pneumatic actuator of a robotic arm comprised in the milking robot, such that the at least one electric motor, the at least one electro-hydraulic actuator and/or the at least one electro-pneumatic actuator causes at least one controllable joint of the robotic arm to bend, rotate, swivel, revolve and/or displace linearly respectively.

In particular, the at least one modified control signal may be adapted to cause a respective control current and/or voltage to be produced, which respective control current and/or voltage has such a temporal profile with respect to magnitude and sign and/or is modulated in such a manner that the respective control current and/or voltage operates the at least one electric motor, the at least one electro-hydraulic actuator and/or the electro-pneumatic actuator to mechanically control the at least one controllable joint to bend, rotate, swivel, revolve and/or displace linearly respectively the robotic arm. In other words, during a period when the at least one modified control signal controls a particular motor/actuator, the control current and/or voltage may vary over time and/or in terms of modulation such that the joint/arm to be controlled moves as intended.

According to still another embodiment of this aspect of the invention, the robotic arm is presumed to have at least two controllable joints, and the at least one modified control signal is configured to cause the respective control current to be fed to the at least one electric motor and/or the at least one electro-hydraulic actuator of the robotic arm such that each of the at least two controllable joints is controlled separately. This namely renders the control of complex robot arms comparatively straightforward.

According to further embodiments of this aspect of the invention, the end-effector contains a teatcup, a teatcup gripper, a teat cleaning unit, a teatcup cleaning unit, and/or a camera unit. Thus, the key operations of any milking robot may be effected.

According to another aspect of the invention, the object is achieved by a method for controlling a milking robot to move an end-effector in at least one dimension to a desired position according to a desired velocity profile. The method involves obtaining a set vector in a feedforward module, which a set vector specifies the desired velocity profile. The method also involves producing at least one predicted control signal based on the set vector. Further, the method involves obtaining a modified position in a closed-loop controller, for example of PID type. Additionally, the method involves producing at least one primary control signal for controlling the end-effector to the desired position, which at least one primary control signal is based on the modified position. Moreover, the method involves deriving at least one modified control signal. The at least one modified control signal is derived in a first summation module based on the at least one primary control signal and the at least one predicted control signal. The at least one modified control signal is adapted to be fed to the milking robot for controlling the end-effector to the desired position according to the desired velocity profile. In addition, the method involves deriving the modified position in a second summation module. The modified position is derived based on the desired position and at least one output signal from the milking robot. The at least one output signal reflects a registered position of the end-effector, for example registered via one or more position encoders. The feedforward module contains a trained ANN, which includes an input layer configured to obtain the set vector and an output layer configured to provide the at least one predicted control signal. A number of hidden layers interconnect the input and output layers. Each of the input, output and hidden layers includes a respective set of nodes that are connected to nodes to the respective of neighboring layers via a respective weight. Said weights have been assigned through a training process in which the at least one output signal was used as training data and registered control signals configured to control the end-effector of the milking robot were used as reference data. The advantages of this method are apparent from the discussion above with reference to the controller.

According to a further aspect of the invention, the object is achieved by a computer program loadable into a non-volatile data carrier communicatively connected to at least one processing unit. The computer program includes software for executing the above method when the program is run on the at least processing unit.

According to another aspect of the invention, the object is achieved by a non-volatile data carrier containing the above computer program.

Further advantages, beneficial features and applications of the present invention will be apparent from the following description and the dependent claims.

BRIEF DESCRIPTION OF THE DRAWINGS

The invention is now to be explained more closely by means of preferred embodiments, which are disclosed as examples, and with reference to the attached drawings.

Figure 1     shows a block diagram of a controller according to one embodiment of the invention;

Figure 2     illustrates the general principle according to which the ANN may be trained according to one embodiment of the invention;

Figure 3     shows a milking robot according to one embodiment of the invention;

Figure 4     illustrates how the controller may be implemented in software running on a processing unit according to one embodiment of the invention; and

Figure 5     illustrates, by means of a flow diagram, the general method for controlling a milking robot according to the invention.

DETAILED DESCRIPTION

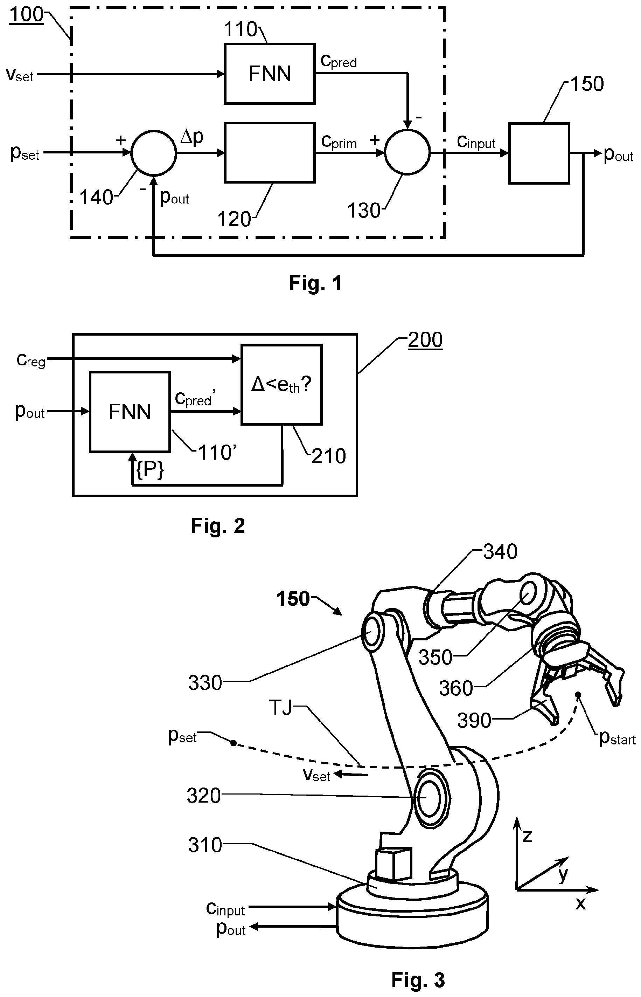

Figure 1 shows a block diagram of a controller 100 according to one embodiment of the invention.

The controller 100 is adapted to control a milking robot 150, which is schematically represented in Figure 1 and shown in further detail in Figure 3. The controller 100 is adapted to control the milking robot 150 to move an end-effector 390 in at least one dimension, for example extending in three mutually perpendicular directions x, y and z respectively to a desired position $p_{set}$ according to a desired velocity profile. It should be noted that although the directions x, y and z, as such, represent a Cartesian coordinate system, the joints and links of the milking robot's 150 robotic arm may be controlled using other types of reference systems, such as polar coordinates. Further, multiple coordinate systems may be employed in a hierarchical manner to control different parts of the milking robot 150. For instance, the movements of each joint/link of the robotic arm may be defined in a separate coordinate system that relates to the joint/ link in question.

The controller 100 contains a feedforward module 110, a closed-loop controller 120, and first and second summation modules 130 and 140 respectively.

The feedforward module 110 is configured to obtain a set vector $v_{set}$ that specifies the desired velocity profile; and based on the set vector $v_{set}$ produce at least one predicted control signal $C_{pred}$. As will be elaborated upon below, the feedforward module 110 includes a trained ANN, for example a recurrent neural network, which is GRU-based, i.e. an ANN that contains gated recurrent units.

The closed-loop controller 120 is configured to obtain a modified position $\Delta p$ and based thereon produce at least one primary control signal $C_{prim}$ for controlling the end-effector 390 to the desired position $p_{set}$. According to embodiments of the invention, the closed-loop controller 120 is configured to operate according to a PID regulation principle, a linear-quadratic regulation principle or a model predictive control principle to produce the at least one primary control signal $C_{prim}$.

The first summation module 130 is configured to derive at least one modified control signal $c_{input}$ based on the at least one primary control signal $c_{prim}$ and the at least one predicted control signal $C_{pred}$.

Specifically, the first summation module 130 may be configured to derive at least one modified control signal $c_{input}$ by subtracting the at least one predicted control signal $c_{pred}$ from the at least one primary control signal $c_{prim}$. According to embodiments of the invention, each of the at least one modified control signal $c_{input}$, the at least one predicted control signal $c_{pred}$ and the at least one primary control signal $c_{prim}$ represents a control current and/or voltage to be fed to at least one electric motor, at least one electro-hydraulic actuator and/or at least one electro-pneumatic actuator of the robotic arm in the milking robot 150. The at least one modified control signal $c_{input}$ is output from the controller 100 and the at least one modified control signal $c_{input}$ is adapted to be fed to the milking robot 150 for controlling the end-effector 390 to the desired position $p_{set}$ according to the desired velocity profile.

The second summation module 140 is configured to derive the modified position $\Delta p$ based on the desired position $p_{set}$ and at least one output signal $p_{out}$ from the milking robot 150. Specifically, the second summation module 140 may be configured to derive the modified position $\Delta p$ by subtracting a position specified by the at least one output signal $p_{out}$ from the desired position $p_{set}$. Here, the at least one output signal $p_{out}$ reflects a position of the end-effector 390, which position is registered by at least one position encoder on the milking robot 150. The position encoder may for example be of optical, magnetic, or capacitive type.

The feedforward module 110 includes a trained ANN, which includes an input layer configured to obtain the set vector $v_{set}$ and an output layer configured to provide the at least one predicted control signal $C_{pred}$. A number of hidden layers interconnect the input layer and the output layer. Each of the input layer, the output layer and the hidden layers contains a respective set of nodes that are connected to nodes to the respective of neighboring layers via a respective weight, which has been assigned through a training process. In this training process, the at least one output signal $p_{out}$ was used as training data and registered control signals $c_{reg}$ configured to control the end-effector 390 of the milking robot 150 were used as reference data. This means that the end-effector 390 was controlled to a large number of positions within an operation range of the milking robot's 150 robotic arm; and while doing so, the control signals $c_{reg}$ that made said arm perform these movements were registered. For example, the training data may be sampled at a sampling frequency around 5 kHz, i.e. so that consecutively updated data values are separated in time from one another by 0.2 ms.

Referring now to Figure 2, according to one embodiment of the invention, the weights of the trained ANN have been determined iteratively via a backpropagation training process {P} executed in a training unit 200. The training unit 200 repeatedly obtains updates of the at least one output signal $p_{out}$ and the associated registered control signals $c_{reg}$. Based on the at least one output signal $p_{out}$, the ANN under training 110' produces at least one predicted control signal $c_{pred}$', which aims at being sufficiently similar to the registered control signals $c_{reg}$ associated with the at least one output signal $p_{out}$.

An evaluation module 210 is configured to check if a difference $\Delta$ between the registered control signals $c_{reg}$ and the at least one predicted control signal $c_{pred}$' is less than a threshold value $e_{th}$. If the evaluation module 210 finds that said difference $\Delta$ is equal to or larger than the threshold value $e_{th}$, the evaluation module 210 is configured to generate a set of adjustment parameters {P}, which causes one or more of the weights in the ANN to be modified to a respective higher or lower value that are expected to lower the difference $\Delta$. This backpropagation training process continues until a convergence criterion is met. In simplified terms this may be said to occur when the difference $\Delta$ becomes smaller than the threshold value $e_{th}$. According to embodiments of the invention, the backpropagation training process requires 400 to 1600 epochs. Preferably, the training process encompasses around 800 to 1000 epochs to train the ANN under training 110'. After that the training process has been completed, the ANN under training 110' represents the trained ANN in the feedforward module 110.

According to embodiments of the invention, the number of hidden layers in the trained ANN is at least two and no more than six. Preferably, the number of hidden layers in the ANN is three or four.

According to one embodiment of the invention, the desired position $p_{set}$ and the set vector $v_{set}$ respectively further describe a trajectory TJ to be followed by for the end-effector 390. Preferably, the velocity of the end-effector 390 along the trajectory TJ is represented in so-called Jacobian kinematics.

According to one embodiment of the invention, the set vector $v_{set}$ describes a velocity for the end-effector 390, where the velocity varies from a start position $p_{start}$ to the desired position $p_{set}$. For example, the set vector $v_{set}$ may describe the velocity for the end-effector 390 such that the end-effector 390 accelerates during a first period from the start position $p_{start}$ and decelerates towards the desired position $p_{set}$ during a second period, i.e. the velocity has a trapezoid profile as a function of time. Of course, the set vector $v_{set}$ may also describe more complex velocity patterns, for instance involving multiple acceleration, deceleration phases and/or periods of constant velocity. Preferably, the milking robot 150 has a robotic arm with at least three controllable joints, illustrated as 310, 320, 330, 340, 350 and 360 respectively in Figure 3, and the set vector $v_{set}$ specifies a respective velocity profile for each of the controllable joints 310, 320, 330, 340, 350 and 360 respectively.

Analogously, according to one embodiment of the invention, the at least one modified control signal $c_{input}$ is adapted to control a milking robot 150 that has a robotic arm with at least three controllable joints, for example 310, 320, 330, 340, 350 and 360 as shown in Figure 3.

As mentioned above, the at least one modified control signal $c_{input}$ may represent electric currents for controlling the milking robot 150. Specifically, according to one embodiment of the invention, the at least one modified control signal $c_{input}$ is adapted to cause a respective control current to be fed to at least one electric motor and/or at least one electro-hydraulic actuator of the robotic arm of the milking robot 150. Here, the respective control current has such a temporal profile with respect to magnitude and sign that the at least one electric motor and/or the at least one electro-hydraulic actuator causes the at least one controllable joint 310, 320, 330, 340, 350 and/or 360 respectively of the robotic arm to bend, rotate, swivel and/or revolve respectively. Said temporal profile thus specifies, for each of said joints, how the control current and/or voltage to an electric motor/electro-hydraulic actuator configured to control that joint shall vary over time in terms of Amperage and the direction in which the current flows to accomplish a desired movement, i.e. such that the end-effector 390 follows the trajectory TJ to the desired position $p_{set}$. Of course, the temporal profile may also be defined by means of a modulated signal, for example of a pulse-width, phase, frequency or amplitude modulated format.

According to one embodiment of the invention, the robotic arm is presumed to have at least two controllable joints, say 310, 320, 330, 340, 350 and 360 respectively, and the at least one modified control signal $c_{input}$ is configured to cause the respective control current to be fed to the at least one electric motor and/or the at least one electro-hydraulic actuator of the robotic arm such that each of the at least two controllable joints 310, 320, 330, 340, 350 and 360 is controlled separately.

It is advantageous if the end-effector 390 includes, or carries, one or more of the following: a teatcup, a teatcup gripper, a teat cleaning unit a teatcup cleaning unit and a camera unit. Namely, this enables the milking robot 150 to effect essentially all the tasks that may typically be assigned to the milking robot 150 in a milking installation.

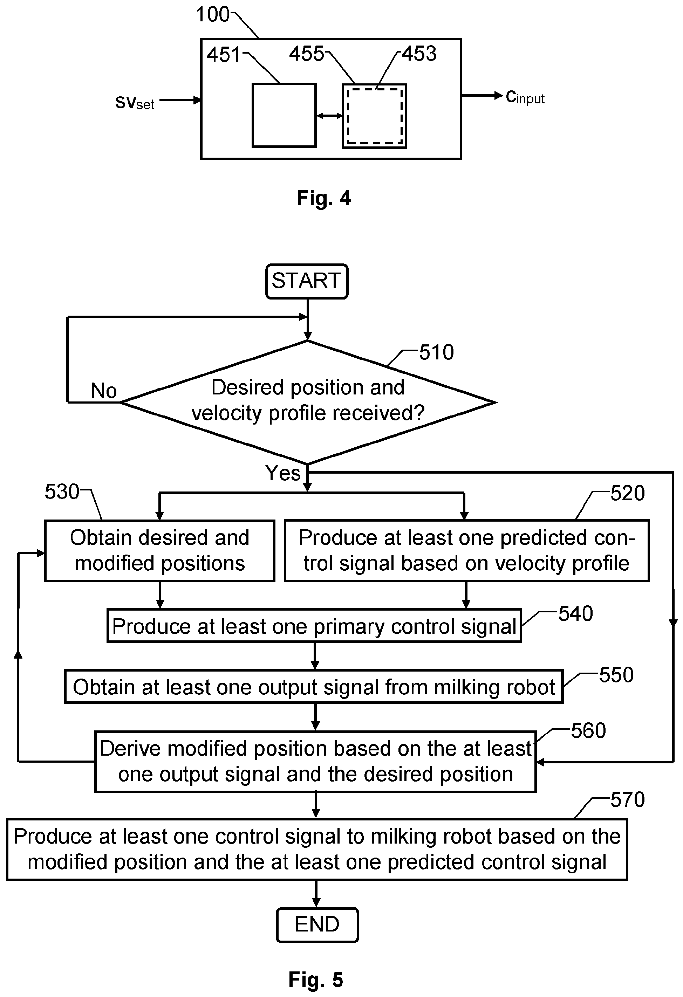

Figure 4 illustrates a block diagram of the controller 100 according to one embodiment of the invention. It is generally advantageous if the controller 100 is configured to effect the above procedure in an automatic manner by executing a computer program 453 in a processing device 451, which includes at least one processing unit. The processing device 451 is communicatively connected to a memory unit 455, i.e. non-volatile data carrier, storing a computer program 453, which, in turn, contains software for making the processing device 451 execute the actions mentioned in this disclosure when the computer program 453 is run on the at least processing unit in the processing device 451. According to this embodiment of the invention, the trained ANN in the feedforward module 110 is preferably implemented by means of a computer program that runs on the processing device 451.

According to another embodiment of the invention, the trained ANN 180 is instead implemented in hardware, such as in one or more neuromorphic circuit, i.e. mixed-signal integrated circuit containing both analog circuits and digital circuits, which aims at mimicking biological neural functions.

To sum up, and with reference to the flow diagram in Figure 5, we will now describe the computer-implemented method according to the invention for controlling the milking robot 150 to move an end-effector 390 in at least one dimension, e.g. x, y and z, to a desired position $p_{set}$ according to a desired velocity profile.

In a first step 510, it is checked if the desired position $p_{set}$ and the desired velocity profile have been received. If so, steps 520 and 530 follow. Otherwise, the procedure loops back, and stays in step 510.

In step 520, at least one predicted control signal $c_{pred}$ is produced based on a set vector $v_{set}$ that specifies the desired velocity profile. The at least one predicted control signal $c_{pred}$ is produced in a feedforward module comprising a trained ANN, which contains an input layer configured to obtain the set vector $v_{set}$, and an output layer configured to provide the at least one predicted control signal $C_{pred}$. A number of hidden layers interconnecting the input layer and the output layer, wherein each of the input, output and hidden layers comprises a respective set of nodes connected to nodes to the respective of neighboring layers via a respective weight that has been assigned through a training process in which the at least one output signal $p_{out}$ was used as training data and registered control signals $c_{reg}$ configured to control the end-effector 390 of the milking robot 150 were used as reference data.

In step 530, which is parallel to step 520, the desired position $p_{set}$ is obtained a closed-loop controller together with a modified position $\Delta p$ derived in a step 560, see below.

After steps 520 and 530 follows a step 540 in which at least one primary control signal $c_{prim}$ is produced from based on the modified position $\Delta p$ in a closed-loop controller. The at least one primary control signal $c_{prim}$ is configured to control the end-effector 390 to the desired position $p_{set}$.

Subsequently, in a step 550, at least one output signal $p_{out}$ from the milking robot 150 is obtained. The at least one output signal $p_{out}$ reflects a registered position of the end-effector 390.

In step 560 thereafter, the modified position $\Delta p$ is derived in a summation module. The modified position $\Delta p$ is derived based on the at least one output signal $p_{out}$ from the milking robot 150 and the desired position $p_{set}$.

After that, in s step 570, another summation module derives at least one modified control signal $c_{input}$ based on the at least one primary control signal $c_{prim}$ and the at least one predicted control signal $C_{pred}$. The at least one modified control signal $c_{input}$ is adapted to be fed to the milking robot 150 for controlling the end-effector 390 to the desired position $p_{set}$ according to the desired velocity profile.

After step 570 the procedure ends.

The process steps described with reference to Figure 5 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, however, may be varied freely within the scope of the claims.

**Nomenclature**

$\beta$ Probability of a type II error
$H0$ Null hypothesis
$H1$ Alternative hypothesis
$p$ - $value$ Probability threshold for a type I error
$RStudio$ Programming software for computing and visualizing statistics and data.
$W$ Closeness of the sample data to the normal distribution

**Acronyms**

| | |
|---|---|
| **AMS** | Automatic Milking System |
| **DoF** | Degrees of Freedom |
| **FF** | Feedforward |
| **FNN** | Feedforward Neural Networks |
| **GRU** | Gated recurrent unit |
| **LSTM** | Long short-term memory |
| **MSE** | Mean Squared Error |
| **NN** | Neural Network |
| **RNN** | Recurrent Neural Networks |
| **VMS** | Voluntary Milking System |

**1 Introduction**

This chapter aims to provide a background to the thesis, together with delimitation's to it and what will be examined and tested during the experiment conducted for this thesis.

**1.1 Background**

The utilization of technology to enhance milk yields and improves efficiency in milk production has been a longstanding practice. However, a significant development emerged in the 1980s/90s and continues to grow, with the introduction of Automatic Milking System (AMS) [1][2]. This innovation, exemplified by the Voluntary Milking System (VMS) developed by the Swedish company DeLaval, has proven to enhance herd health, alleviating farmer's workload and increase milk yields [3]. Due to economic pressures, demographic shifts, technological innovations and consumer expectations, large changes has been made to the global dairy industry [2]. Where the adoption of technology on dairy farms is accelerating, and the usage of AMS systems is increasing, including Delavals offering of the VMS.

The VMS operates as an autonomous enclosure where cows have the freedom to enter at their own discretion for milking. Upon entry, a robotic arm is deployed to apply both cleaning and milking cups, facilitating the milking process. Figure 1.1 shows the VMS from Delaval.

**Figure 1.1:** Voluntary milking system VMS V300, ©2023 DeLaval. Reprinted with permission.

The robotic arm in Delavals VMS has to navigate to the teats of the cow that is present within the machine. The teats of a cow can look very different, where the size and rotation of the four teats can differ wildly. In some cows the teats can be rotated in such a way that they touch, this can make it hard for a control system, as it increases the importance of precision, to not attach to the wrong teat.

The current robot arm in the DeLaval VMS machine is a hydraulic robotic arm, actuated by hydraulic cylinders. Hydraulic actuators when used in robotic arms can cause control problems due to their uncertainties and non-smooth non-linearity's [4], making them harder to control. Figure 1.2 gives an overview of the robotic arm in question.

**Figure 1.2:** Overview of VMS robotic arm, CAD model provided by DeLaval

### 1.2 Problem description

Earlier studies [5] [6] have shown that Recurrent Neural Networks (RNN) models have been successful in improving trajectory tracking in simulated robotic arms and electrically actuated robotic arms with multiple Degrees of Freedom (DoF). The RNN models have high adaptability and ability to model underlying systems based on input and output data. These characteristics could prove useful in a control prospective for the electro-hydraulic actuated robotic arm on the Delaval VMS. Hydraulic actuators are hard to control and model because the system response for a hydraulic actuator is dependent on hydraulic flows and valves opening and closing to allow for pressurization of different compartments of the actuator. The hydraulic actuator is therefore indirectly controlled, as the control of the hydraulic actuator is linked to the control of the hydraulic valves.

### 1.3 Purpose

The purpose of this study is to investigate whether a black-box modeling approach such as the usage of neural networks for feedforward control might be beneficial for the modeling of the hydraulic system of the Delaval VMS. The dynamic behavior of the hydraulic actuators might be able to be modeled with the help of input and output data and be taken into account in the control loop, to achieve better trajectory tracking. The aim of this thesis is the implementation of a Neural Network (NN) as a feedforward controller and evaluate whether there's an increase in the performance in velocity trajectory tracking, compared to the currently used feedforward controller in the Delaval VMS robotic arm. The primary research question is the following.

### 1.3.1 Research Question

- How does the currently used feedforward controller compare to a NN feedforward controller in terms of velocity trajectory tracking?

### 1.4 Delimitations

The study is delimited by factors that may constrain its scope to specific operating conditions and environments, potentially affecting the generizability of the NN feedforward controller. The VMS is a 5 DoF robotic arm, where two of the actuators are discretely controlled. This thesis will focus on the three continuously controlled linear electro-hydraulic actuators in the robotic arm. The VMS is a machine that works closely with animals and humans, which puts limitations to the velocities and forces the robotic arm should exert. The experiments and tests of the robotic arm are therefore limited in the allowed ranges of speed and acceleration; consequently, high speed actuation is not examined in this thesis. The testing and experimentation of this thesis are not conducted on animals due to ethical concerns and the testing was conducted with randomized trajectories with randomized velocities and endpoints within the VMS to simulate the process of bringing a milking cup to a position, where the randomized nature of the trajectories was made to introduce variation and better simulate real operation where cows with different udder sizes, udder heights and cow placement within the machine exist.

The experiments were conducted in a lab environment, with static ambient temperature and conditions which might differ from the real world applications of VMS machines that operate in barns with cows.

### 1.5 Stakeholders

This master thesis is conducted at the Swedish company Delaval, a world leading producer of dairy equipment and automated milking systems.

### 1.6 Division of Work

The workload was divided equally between the students, Simon and Omed. Note however, that all the tasks were made in tandem with each other and help was exchanged between both parties regularly.

After finishing the introduction, the thesis began with researching areas of interest. Simon focused on the research regarding working principle of NNs, specifically feedforward NNs and their structure. Omed researched robotic arm control in general and how NNs can be used in system identification in robotics and also implemented into feedforward control. Aside from the research, Simon had a bigger role in constructing the NNs, so that it could be uploaded and implemented to the Delaval VMS, and also performed the statistical analysis. Omed had a bigger role in the signal design and finding the optimum architecture of the NN, through training it. The data gathering process was conducted in tandem with both parties involved.

### 2 Theoretical Background

This chapter explores the theoretical basics of Neural Network-based robotic arm feedforward control. It begins by exploring fundamental control strategies, particularly feedforward control, for achieving precise tracking, and later introduces the concept of system identification and its importance in control design for feedforward controllers. Lastly, the thesis delves into NNs and how they operate, with an emphasis on recurrent networks, and how these NNs have previously been utilized.

### 2.1 Robotic Joint Control

Robotic arm control relies heavily on accurate models that capture the relationship between joint configurations and the resulting e nd-effector po se. Two approaches which are commonly used within the field of robotics are kinematic and dynamic modeling. The kinematics aspect is usually mentioned as inverse kinematics and forward kinematics, whilst common dynamic modelling tends to utilize either an energy-based or force-based interpretation of the system.

As described by Iqbal et al. in [7], the forward kinematics are the calculations of the end-effectors orientation and position in a C artesian s pace, which is d one by considering the current angles and orientations of the joints and linkages connecting the end-effector as inputs. The inverse kinematics computes the angles and configurations of the joints and linkages from the orientation and position of the end-effector. So there is a sort of switch in input/output with the two methods, forward kinematics uses information of joints/linkages as input and gives the end-effector positioning as output and vice versa for the inverse kinematic.

A common method of dynamic modelling is the usage of Lagrangian mechanics with the Euler-Lagrange equations, which was utilized by AA Okubanjo et al. [8] and H Al-Qahtani et al. in [9]. It is said that the dynamic system is defined in terms of work and energy inside of it. Therefore, by obtaining the kinetic and potential energy of the robotic arms joints, it's dynamic can then be described as the constructed Lagrangian function.

When the models of the robotic arms are constructed, they are often used with for example a PID controller, as is done in both [7] and [8] to create a closed-loop system. That way, robotic joint control can be achieved.

### 2.2 Feedforward control

In the realm of control theory, feedforward control represents a fundamental concept aimed at achieving precise and efficient control of dynamic systems. Unlike feedback control, which relies on measuring system outputs and adjusting control actions based on the discrepancy between desired and actual outputs, feedforward control anticipates disturbances and preemptively adjusts control inputs to counteract their effects, or anticipates the needed signal to adhere to the reference value. It does so by being designed as the inverse transfer function of the controlled system [10].

The idea behind feedforward control is rooted in the principle of predictive modeling, where the dynamic behavior of a system is characterized based on known inputs and their corresponding outputs. There are two main use cases for feedforward control: feedforward controller for reference tracking control and feedforward controller for disturbance rejection [10]. Feedforward controllers for reference tracking are mainly used to increase trajectory tracking performance, and feedforward controllers for disturbance rejection mainly are used to preemptively correct disturbances before they impact the system[10]. This thesis will focus on feedforward controllers for reference tracking.

Figure 2.1 shows a common feedforward controller for reference tracking in conjunction with a feedback controller.

**Figure 2.1:** Feedforward with feedback loop

### 2.3 System Identification

Feedforward control requires an inverse transfer function of the controlled system. The process of obtaining the inverse transfer function of a system, requires system identification.

System identification is a fundamental process in control theory, aiming at constructing mathematical models that accurately describe the behavior of dynamic systems. It plays a crucial role in developing effective control strategies by providing insights into the underlying dynamics of the system.

There are various approaches to system identification, each offering unique advantages and challenges. There are three main sub-groups of system identification, white-box, gray-box and black-box system identification. W hite-box designs the model on physical laws and known physical parameters of the system, gray-box identification is when some of the parameters are uncertain, and data is used to estimate these parameters. Black-box identification meanwhile is trying to obtain the system properties by examining the inputs and outputs of the system and trying to construct a model of the system from that data. [11] [12].

Hydraulic robotic systems, such as the one in the Delaval VMS, are characterized by nonlinear dynamics and significant parameter u ncertainties due to the complex interactions with their hydraulic actuators. These challenging properties with hydraulic actuators are highlighted by Zhang et al. [13] when they modelled and controlled a hydraulic excavator's arm. The complexity with hydraulic actuators makes traditional modeling approaches cumbersome making black-box modeling a promising alternative for such systems. Sjöberg et al. describe in their paper [12] different methods of black-box modeling, where it was highlighted that NNs used in system identification is not constrained by the assumptions required in classical parametric models, allowing them to adapt to a wide range of dynamic behaviors. M. Schüssler, T. Münker, and O. Nelles showed in their paper [14] that RNNs are versatile in handling different types of inputs and system dynamics, achieving good results on a state-of-the-art benchmark problem with comparable results to state-of-the-art system identification algorithms.

As stated in the chapter about feedforward controllers, an inverse transfer function of the system is needed, however when designing a feedforward controller with NN it is not the system that it directly models, but rather the system response. However there is a large overlap between the two areas. Methods used in system identification such as excitation signals are beneficial for data gathering and give wide range of system responses to train the NNs.

### 2.3.1 Signals for System Identification

Accurate system identification depends on the selection of an appropriate excitation signal. This signal must effectively stimulate the system's dynamic behavior to yield an accurate model. In the studies by Vuojolainen et al. [15] and Schulze et al. [16] numerous excitation signals are discussed and evaluated for different systems. Some types of signals that yielded promising results for system identification purposes in the studies are:

**Sinusoidal signals:** Applied at various frequencies, they reveal the system's behavior at those specific frequencies. A more comprehensive approach involves sweeping through a range of frequencies using a chirp signal, which can unveil the complete frequency response of the system.

Step **Inputs:** Introducing a sudden change in the input (step) offers a straightforward method to analyze the system's transient response. This analysis allows for the identification of time constants and assessment of system stability.

**Impulse/Pulse:** characterized by short-duration, high-amplitude signals, used to excite all the system dynamics. This proves beneficial for identifying the system's impulse response. However, their sensitivity to noise can be a drawback.

### 2.4 Neural Networks

NNs are computational models inspired by the human brain, consisting of interconnected neurons that process information in layers. They mimic the brain's structure to perform complex tasks. These networks learn through adjusting connections between neurons, otherwise called weights. which are learned through supervised (learning from known input-output pairs), unsupervised (finding patterns in data), or reinforcement learning (adjusting actions based on environmental feedback). NNs can approximate arbitrary functions between the input and output data.

This chapter and the following chapters aim to provide a base of knowledge about the working principles of the NNs and their application. This motivates a well-grounded decision of what type of network should be used in this thesis, where the choice of network can be found in the methodology Section 3.4.3.

### 2.4.1 Feedforward Neural Networks

Feedforward Neural Networks (FNN) stand as a cornerstone in the architecture of NNs, distinguished by their straightforward, non-recurrent structure that moves information in one direction from input to output. This architecture can consist of one or multiple layers, including an input layer, one or more hidden layers, and an output layer. Each layer is made up of neurons that apply a series of matrix multiplications and nonlinear transformations to the data. Horniket et al. showed in the paper [17] that FNNs are capable of approximating any Bore1 measurable function. This is often also called the universal approximation theorem.

The power of an FNN lies in its ability to model complex relationships between inputs and outputs through a process known as the forward pass. During this process, the network uses its current weights and biases to calculate the output for a given input. This is mathematically represented by a set of equations for an *l*-layer NN:

$$h_1 = f^1(W_1^T x + b_1) \qquad\qquad (2.1)$$

$$h_l = f^l(W_l^T h_{l-1} + b_l) \qquad\qquad (2.2)$$

$$y = f^{l+1}(W_{l+1}^T h_l + b_{l+1}) \qquad\qquad (2.3)$$

**Input Layer:**

Equation $2.1$: $h_1 = f^1(W_1^T x + b_1)$ transforms the input $x$ into the first hidden layer's output $h_1$, using the weights $W_1$, bias $b_1$ and an activation function $f^1$ to introduce non-linearity.

**Intermediate Layers / Hidden Layers:**

Equation $2.2$: $h_l = f^l(W_l^T h_{l-1} + b_l)$ applies to each subsequent hidden layer $l$, taking the previous layer's output $h_{l-1}$, and transforming it with the layer's weights $W_l$, bias $b_l$, and activation function $f^l$.

**Output Layer:**

Equation $2.3$: $y = f^{l+1}(W_{l+1}^T h_l + b_{l+1})$ calculates the final output $y$ by transforming the last hidden layer's output $h_l$ using weights $W_{l+1}$, bias $b_{l+1}$, and an activation function $f^{l+1}$.

A simple FNN can be constructed with an input layer, an output layer and layers in between the two, called hidden layers. Where the most simple form would consist of one hidden layer. This architecture can be seen in figure 2.2

**Figure 2.2:** Architecture of a NN with one hidden layer, three input parameters and three output parameters

**2.5 Recurrent Neural Networks**

Recurrent Neural Networks (RNN) are a type of FNN with added recursion, meaning that the output of an RNN serves as an additional input to the RNN. This makes the RNN architecture suitable for sequential data such as time series data, where there is data that is dependent on previous data [18]. RNN applies the formerly discussed recursion via keeping a hidden state h, that gives the system information from the previous steps.

There are different implementations of RNN, the simplest form comes in the form of simple RNNs, which is a sequence of FNN. A problem that can arise with simple RNN networks is a vanishing gradient problem. The vanishing gradient problem occurs when the gradients used to update a NN's weights become very small, making learning slow or stagnant. Variations of RNN using gated units, such as Long short-term memory (LSTM) and Gated recurrent unit (GRU) networks solve the gradient decent problem of the simple RNN, and increase the performance of the networks[19].

### 2.5.1 Long Short-term Memory

LSTM networks, introduced by Hochreiter and Schmidhuber in 1997 in the paper[20], are a significant modification to the traditional RNN architecture. They are made to avoid the long-term dependency problem, allowing them to remember information for extended periods. The key to LSTM's effectiveness lies in its specialized structure of cells and gates (input, forget, and output gates), which regulate the flow of information. These gates can learn which data in a sequence is important to keep or forget, enabling the network to maintain a long-term memory.

LSTM models have changed a bit since their inception in 1997, and a modern implementation by Chung et al. can be found in [21]. The LSTM model structure is explained below.

$$i_t = \sigma(W_i x_t + U_i h_{t-1} + V_i c_{t-1}) \qquad (2.4)$$

$$f_t = \sigma(W_f x_t + U_f h_{t-1} + V_f c_{t-1}) \qquad (2.5)$$

$$\tilde{c}_t = \tanh(W_c x_t + U_c h_{t-1}) \qquad (2.6)$$

$$c_t = f_t c_{t-1} + i_t \tilde{c}_t \qquad (2.7)$$

$$o_t = \sigma(W_o x_t + U_o h_{t-1} + V_o c_t) \qquad (2.8)$$

$$h_t = o_t \tanh(c_t) \qquad (2.9)$$

**Input Gate:**

Equation 2.4: $i_t = \sigma(W_i x_t + U_i h_{t-1} + V_i c_{t-1})$ calculates how much of the new information that should be added to the new cell state. The input vector $x_t$, the previous hidden state vector $h_{t-1}$ and the previous cell state $c_{t-1}$ are weighted with the weight $W_i$, $U_i$ and $V_i$, together with a sigmoid function $\sigma$ to output a value between 0 and 1 as a factor for how much new information that should be added to the cell state $c_t$.

**Forget Gate:**

Equation 2.5: $f_t = \sigma(W_f x_t + U_f h_{t-1} + V_f c_{t-1})$ calculates how much of the old information that should be added to the new cell state. The input vector $x_t$, the previous hidden state vector $h_{t-1}$ and the previous cell state $c_{t-1}$ are weighted with the weight $W_f$, $U_f$ and $V_f$ together with a sigmoid function $\sigma$ to output a value between 0 and 1 as a factor that decides how much of the old cell state $c_{t-1}$ that should be added to the new cell state $c_t$

**Candidate Cell State:**

Equation 2.6: $c\tilde{c}_t = \tanh(W_c x_t + U_c h_{t-1})$ calculates a candidate cell state $\tilde{c}_t$ based on the input vector $x_t$, and the previous hidden state vector $h_{t-1}$ together with the weights $W_c$, $U_c$ and the tanh function used to normalize the output between 1 and -1.

**Cell State Update:**

Equation 2.7: $c_t = f_t c_{t-1} + i_t \tilde{c}_t$ calculates the new value for the cell state $c_t$. The previous cell state $c_{t-1}$ is multiplied by the factor $f_t$ that decides how much of the old cell state that should be added to the new cell state $c_t$. In the same manner the factor $i_t$ for how much of the candidate cell state $\tilde{c}_t$ that should be added to the new cell state $c_t$ is used in the calculation, calculating the new cell state $c_t$.

**Output Gate:**

Equation 2.8: $o_t = \sigma(W_o x_t + U_o h_{t-1} + V_o c_t)$ calculates the output $o_t$ for the current time step. The input $x_t$, the previous hidden state $h_{t-1}$ and the new cell state $c_t$ together with the weights $W_o$, $U_o$ and $V_o$ and the sigmoid function $\sigma$

calculates the output as a value between 0 and 1 (normalized).

**Hidden State Update:**

Equation 2.9: $h_t = o_t \tanh(c_t)$ updates the hidden state $h_t$. it blends the values of the output gates output $o_t$ and the current cell state $c_t$ which the it also uses a tanh function on, to normalize the cell state between -1 and 1.

**2.5.2 Gated Recurrent Unit**

The Gated Recurrent Unit, developed by Cho et al. in 2014 [22], is another variant of the RNN that aims to solve the vanishing gradient problem while being more computationally efficient than LSTMs. GRUs simplify the LSTM architecture by combining the forget and input gates into a single "update gate" and merging the cell state and hidden state, this results in a more streamlined model.

An implementation of a GRU network by Chung et al. [21] is explained bellow with the equations that make up a GRU model.

$$z_t = \sigma(W_z x_t + U_z h_{t-1}) \qquad (2.10)$$

$$r_t = \sigma(W_r x_t + U_r h_{t-1}) \qquad (2.11)$$

$$\tilde{h}_t = \tanh(W x_t + U(r_t \odot h_{t-1})) \qquad (2.12)$$

$$h_t = (1 - z_t)h_{t-1} + z_t \tilde{h}_t \qquad (2.13)$$

**Update Gate:**

Equation 2.10: $z_t = \sigma(W_z x_t + U_z h_{t-1})$ calculates the update gate, determining how much of the past information from $h_{t-1}$ needs to be passed along to the future. It uses the current input $x_t$, the previous hidden state $h_{t-1}$, weights $W_z$ and $U_z$, and the sigmoid-function $\sigma$ to output values between 0 and 1.

**Reset Gate:**

Equation 2.11: $r_t = \sigma(W_r x_t + U_r h_{t-1})$ computes the reset gate, deciding how much of the past information to forget. Similar to the update gate, it uses weights $W_r$ and $U_r$ and the sigmoid-function $\sigma$, influencing the level of influence the past state has on the candidate state.

**Candidate State:**

Equation 2.12: $\tilde{h}_t = \tanh(W x_t + U(rt \odot h_{t-1}))$ calculates the candidate hidden state for the current time step, combining the current input and the modified previous hidden state $r_t \odot h_{t-1}$ through a *tanh* function for normalization. This state represents the new memory to be added, if the update gate allows it (see equation 2.7 for explanation).

**Final Hidden State / Output**:

Equation 2.13: $h_t = (1 - z_t)h_{t-1} + z_t \tilde{h}_t$ updates the hidden state by blending the old state $h_{t-1}$ and the candidate state $\tilde{h}_t$ controlled by the update gate $z_t$. This equation ensures that the GRU can retain long-term dependencies while allowing for updates with new information. The final hidden state output is also the output of the network $y_t = h_t$ for that time step.

**2.6 Related Work**

Available studies strictly related to the control systems used for hydraulic robotic arms in the milking process of a cow, are rare, if not non-existent. The specific application examined in this thesis will have an impact on the experiments conducted and the application, as the robotic arm used by the Delaval VMS has workspace constraints not typical in other robotic arm applications as a result of the cage it operates in to milk the cows. However there are studies in robotics and control touching the same problems such as robotic control, actuator control and the usage of NNs for these processes.

### 2.6.1 Feedforward Control in Robotics and Actuators

J. Kongthon investigated the usage of feedforward control in non-linear systems in a robotic arm example in the paper [23]. The study found that feedforward control in conjunction preformed better than the two parts separate and highlighted that the feedback controller got worse as the trajectory demanded speed got faster. The study also concluded that the addition of a feedforward controller substantially improved trajectory tracking. The results show that the controller without the feedforward part seemed to experience a phase delay in the response. This is further stressed in the study [24] by Micheal et al. where they introduced a feedforward controller to reduce phase lag in an electro hydraulic actuator that they were controlling, giving a faster response. The Delaval VMS robotic arm is actuated by electro hydraulic actuators, making this comparison particularly relevant. Both studies underline the significant impact of integrating feedforward controllers in enhancing the performance, which is especially important in the context of electro-hydraulic actuators that are inherently challenged by dynamic non-linearities and phase delays.

### 2.6.2 Recurrent Neural Networks for System Identification

Rehmer and Kroll investigated the usage of LSTM models and GRU models for system identification in their paper [25]. The non-linear system investigated in their paper is different from the one in this thesis, however the methods used to optimize their models can be applicable in other scenarios. Primarily the difference in performance between the types of RNN networks, excitation signals, loss functions and optimizes for the NNs are of interest. In Rehmer and Krolls study LSTM and GRU networks achieved good results on the identification of an electro-mechanical throttle which is classed as a non-linear system. The study's usage of mean squared error (MSE) as Loss function, ADAM as the Optimizer and a range of viable learning rates (0.1-0.0001) can help narrow search areas when conducting hyperparameter tuning of the NNs in this thesis. Additionally, the comparison of performance between LSTM and GRU models across different network architectures revealed GRU networks adeptness in smaller state dimensions and the feasibility to use them for system identification of non-linear systems.

Similarly to A. Rehmer and A. Kroll, V. Shopov and V. Markova wrote a paper about identification of non-linear dynamic systems, where the systems examined in their paper were Lorenz, Roessler and Burke-Shaw attractors and they did this with the help of LSTM, simple RNN and GRU networks in their paper [26]. Equivalently to A. Rehmer and A. Kroll, the choice of optimizer was ADAM and MSE as Loss function, establishing these to be suitable choices for similar applications, such as the one investigated in this thesis. Additionally V. Shopov and V. Markova study's result points towards GRU networks achieving better results than the other networks examined when there is less training data, however when the size of the dataset increases the resulting difference between LSTM and GRU networks disappeared and similar results were achieved. The two studies validate that GRU networks are a sound choice for system identification applications as diminishing performance gap between LSTM and GRU networks as dataset sizes increase suggests that both network types are scale able and adaptable to varying data volumes, but GRU models provide better results at lower data volumes. Also as both study's used the same loss and optimizer, that might suggest them as good choices during training of this thesis's NNs.

### 2.6.3 Recurrent Neural Networks for Feedforward Control

Zhou et al. presented in their paper [27] performance oriented feedforward compensation strategies for precision mechatronics, where a version of GRU based feedforward compensation was used. The implementation was to compensate the reference signal, which differs a bit from the use case in this thesis where a feedforward controller is constructed. Regardless of the differences, there are a lot of similiarities between the two.

Zhou et al. results from their paper showed that their GRU based feedforward compensation achieved good trajectory tracking, however they noted that high frequency vibration components affected the accuracy of their GRU model. Another note was the GRU models ability to extrapolate non repetitive trajectories without a repetitive re-learning process. R. Zhou et al.'s findings highlight the versatility and efficiency of the GRU-based feedforward compensation in handling diverse and dynamic tracking tasks, which should translate in the similar scenario seen in this thesis. However the problems that arose in their paper namely the impact of high-frequency vibration components on the GRU model's accuracy presents a significant challenge and has to be taken into account during testing and training.

S. Xie and J. Ren investigated the usage of recurrent NNs for predictive control of piezo electric actuators in the paper [28]. Piezo electric actuator can exhibit non-linear tendencies in some frequency ranges, which is what S. Xie and J. Ren addressed in their paper. While the controller in their paper was implemented with other parts to address system responses at high frequencies, their implementation of an RNN based feedforward controller increased trajectory tracking. These promising results indicate that the abilitiy to model actuators and non-linear dynamic behavior of actuators is possible, and therefore should be applicable to other similar actuators, which might include the electro hydraulic actuators controlled within this thesis.

### 2.7 Hyperparameter Tuning

Training an effective NN involves more than just choosing an architecture and feeding it data. NNs rely on a set of configurable parameters known as hyperparameters, which define the learning process itself. These hyperparameters are set before training begins and significantly impact the network's performance. Finding the optimal configuration for these hyperparameters is crucial for achieving the best results on a specific t ask. Commonly tuned hyperparameters in NNs, as was done in [29],[30] and [26] include:

**Learning Rate:** Controls the step size for weight updates during training. Too high and the network might miss the optimal solution, too low and training is slow.

**Epochs:** Number of times the entire training data is passed through the network. Too few and the network might underfit, too many and it might overfit.

**Batch size:** Number of data points processed together. Larger batches are faster but can be less accurate, smaller batches are slower but potentially more accurate.

**Network Architecture:** Refers to the number of hidden layers and neurons per layer. More complex networks can learn well but are also more prone to overfitting.

Finding the optimal configuration for an NN's hyperparameters requires exploring a vast space of possibilities. However, due to limitations in computational resources (budget), exhaustively evaluating every single combination may be impractical. Methods to find out which combination of these hyperparameters leads to the best performance for the task at hand, two that are commonly used and are thoroughly explained in [31], [32] and [33] are:

**Grid Search:** Systematically evaluates a predefined grid of hyperparameter values. It provides a clear and structured approach, making it easier to analyze how individual hyperparameters impact performance. If the budget allows for evaluating every combination within the defined grid, grid search will identify the best performing set of hyperparameters, the optima. It does however become computationally expensive and time-consuming as more hyperparamterers are evaluated, and can also lead to the curse of dimensionality.

**Random Search:** This approach prioritizes efficiency over exhaustiveness by taking random combinations of hyperparameter values from a defined range then evaluate it by training the network and measuring its performance. It can explore a large space of hyperparameter combinations faster than grid search, especially for high-dimensional problems (many hyperparameters). This makes it more suitable when budget is a constraint. Since it relies on random combinations, there's no guarantee that random search will find the absolute optima combination. However, it can often find a very good configuration within a reasonable budget.

### 3 Methodology

To answer the research questions from section 1.3.1, an NN was constructed as a feedforward controller for the Delaval VMS robotic arm's actuators. The NN was constructed with data gathered from the Delaval VMS. To investigate the abilities of the NN constructed, an experiment was conducted. First the experiment and its setup will be explained and later the construction of the NN controller will be explained.

### 3.1 Experiments

A common way to conduct quantitative research is via experiments. One of the typical reasons to run an experiment is to compare the responses achieved at different settings of controllable variables [34], which is the aim of this thesis when comparing two different feedforward controllers. To ensure the reliability and validity of the results, several fundamental principles and techniques in the experimental design must be adhered to, as outlined by Dean et al. in [34]. The outlined fundamental techniques were replication, blocking and randomization. Randomization aims to prevent systematic and personal biases, blocking can be seen as the identification of potential sources of variability other than the controllers themselves and later control these variations, and repetition is the replication with the same experimental conditions, so the effects of interest can be studied. Dean et al. gave a standard experimental designs in the book [34], and the design used in this thesis is denoted as "completely randomized designs". A source of variation was theorized to be the application of the controller on different VMS's, to account for this the controllers are to be tested on multiple machines. Also using different trajectories with different geometry's and different max velocities could also add variation and this was also considered during the experiments.

### 3.2 Experimental design

The experimental design was based on the book [34] by A. Dean et al.

### 3.2.1 Objective

The objective with the experiment was to answer the research questions outlined in 1.3.1, which were stated as:

- How does the currently used feedforward controller compare to a NN feedforward controller in terms of velocity trajectory tracking?

### 3.2.2 Hypothesis

To operationalize an experiment the research questions have to be converted into a hypothesis, which later will be used when statistical tests are conducted. Velocity error is used to see how well the different feedforward controllers adhere to their demanded trajectory. The velocity error is a combination of the velocity error for the Cartesian velocities in X, Y and Z for the robot, calculated as the desired velocity subtracted by actual velocity.

It is hypothesised based on the previous research outlined in 2.6 that the GRU-based controller will be able to model the dynamics of the actuators in the robotic arm, and therefore be able to preform better predictive control as a feedforward controller and achieve a lower MSE compared to the currently used feedforward controller. Any details regarding the currently used controller is considered a business secret and will not be addressed in this thesis.

The hypothesis leads to the following null- and alternative hypothesises:

- **H0:** There is no difference in mean of MSE between the current feedforward controller and the GRU-based feedforward controller

- **H1:** There is a difference in mean of MSE between the current feedforward controller and the GRU-based feedforward controller

### 3.2.3 Sources of Variation

The sources of variation, was in the case of this thesis things that could cause an observation in the experiment to have a different outcome. However the impact of these can be minor but should be taken into account when conducting an experiment.

### Treatment factors

As described in [34], treatment factors constitute "any substance or item whose effect on the data is to be studied". Within the context of this thesis, the treatment factors are the two distinct feedforward controllers. These controllers comprised of a GRU-based NN feedforward controller and the baseline feedforward controller already present in the Delaval VMS. The feedforward controllers regulate the actuation of each joint, with the VMS's robotic arm possessing three electro-hydraulic linear actuators.

### Experimental Units

The experimental units are what the treatment factors were applied to. Which was the robotic arm of the VMS. To improve on the validity and generalizability of the claims, the experiment was conducted on two VMS machines.

### 3.2.4 Assignment Rule

Assignment rule is how the factors in the experiment are applied. The experimental units (which robot) were randomized for each run with the help of a computer as well as which treatment factor(which controller) to use. This randomizes the study and eliminates biases. For the study, the end position and speed of a trajectory given to the controllers were also randomized with the help of a computer, however the position was limited in its movements as to not collide with the cage of the VMS.

### 3.2.5 Measurements

To make it possible to answer the aforementioned research question, the way to measure the data has to be discussed. The adherence to the trajectory will be measured as the MSE between the desired velocity trajectory and the actual velocity trajectory for each of the actuators in the robotic arm, and these were then combined to get the MSE for the entire robotic arm.

### 3.2.6 Pilot

A pilot of the experiment was ran to practise the experimental procedure and to gather data that could be used to estimate the number of observations required for the real experiment. For the pilot 100 samples were gathered.

### 3.2.7 Number of observations

The pilot was used to determine the number of observations needed to answer the research question and the hypothesises linked to it. To do this, the statistics software **RStudio** was used and a power test was conducted, the data was investigated to know if it was normally distributed and to ensure the assumptions in the power test was correct. A Shapiro-Wilk test was conducted to verify the distribution. The Shapiro-Wilk test is a statistical test that assesses whether a sample comes from a normally distributed population, by comparing the order statistics of the sample to the corresponding expected values from a normal distribution. It has an **H0** that the data is drawn from a normal distribution. The test gives a p-value (probability threshold for a type I error) and a *W* measures the closeness of the sample data to the normal distribution, with values closer to 1 indicating a better fit.
Data from both types of controllers were gathered for the pilot, and the following distributions were found:

**Figure 3.1:** Histogram over MSE for the GRU-based feedforward controller and the currently used feedforward controller

When conducting the Shapiro-Wilk test on the distributions, it was concluded that the two distributions were not normally distributed as the p-value in both cases were below 0.05. The current data is not suitable to use for a t-test as the data is not considered normally distributed, however the data can be transformed and the transformed data could be used instead if it is normally distributed. The data was therefore transformed with *log10* to acquire:

**Figure 3.2:** Histogram over log10(MSE) for the GRU-based feedforward controller and the currently used controller

A Shapiro-Wilk test was then performed on the transformed data, which gave the following result: $W$ = 0.98384 and p-value = 0.2675 for the distribution of the GRU-based feedforward controller and $W$ = 0.98357 and p-value = 0.2554 for the currently used feedforward controller. The results with high $W$ indicate a good fit to normality and the p-values above 0.05 with a margin fails to reject **H0** that the data is normally distributed. The results tell that the transformed data is appropriate for statistical methods that assume normality.

Variables used for the power test were $\alpha$ = 0.05 , power = 0.8 and Cohens $d$ (Effect size) determined by using the data from the pilot test. The significance level of a is the probability threshold for a type I error (probability of rejecting the **H0** when it is true). The power level or 1 - $\beta$, where $\beta$ is the probability of a type II error (failing to reject a false **H0**). Cohens $d$ or the effect size is a measure of the magnitude of the treatment effects (difference in the feedforward controllers). The pilot consisted of 100 samples and calculating Cohens $d$ resulted in a value of $d$ = 0.516. The values were used in **RStudio** to determine the number of samples needed for conclusive results from a t-test, which resulted in that 62 samples were needed. The calculation for number of samples needed was conducted for all three of the observed actuators, with similar results achieved for all three, but where the highest number of samples was chosen.

### 3.2.8 Analysis

A t-test is conducted, to observe if there is a statistical difference between the data. The t-test can help in determining if the differences in the averages (means) of two groups are likely due to chance or if they reflect a true difference.

### 3.3 On External and Internal Validity

This experiment acknowledges several limitations that could potentially affect the generalizability (external validity) and the certainty (internal validity) of the findings. There are threats to the external and internal validity and this chapter acknowledges the potential problems and discusses how they were addressed.

### 3.3.1 External Validity

The study utilizes the robot arm of the VMS machine. While this ensures consistency within the study, the results might not be directly applicable to other robot arm models with different configurations or payload ca pacities. Ad ditionally the type of actuators used may also affect the results as the dynamic properties might differ from the ones present in the Delaval VMS, compared to other robotic actuators. To ensure the general results for the VMS and the milking of different size cows with different udder sizes and positions in the cage of the Delaval VMS, the end positions of the trajectories generated for the study were randomized as well as the velocity of the trajectories. This cannot only test for one condition but also get a wide range of trajectories. The study was made on lab machines, which may not perfectly replicate real-world milking scenarios. These limitations should be kept in mind when examining the results

### 3.3.2 Internal Validity

Internal validity consists of both reliability and validity. To address reliability, the measurement procedure will be explained. All data was collected automatically, where scripts took care of the generation of randomized trajectories, as well as logging the data for the run of the trajectory. The desired trajectory was compared with the actual trajectory to calculate the MSE for a trajectory. The environment surrounding the testing area also remained consistent throughout the experiments, with consistent application of configurations and calibrations done before testing. Binary's of the code were used to make sure it was the same code being run each time, and it did not get recompiled between tests. A pilot of the experiment was conducted and the results analysed for potential problems, and was used in conjunction with a power test to determine the number of samples required for the experiment. The results from the pilot test were also in a comparison with the experimental data to ensure no big differences between them, that could indicate a change in lab setup had been made. Frequent meetings and interaction with the supervisor at Delaval was made to introduce member checking, to find potential problems with testing setup and results. Triangulation was also introduced in the form of blocking in the study with important parameters that could affect the results, in which it was concluded that the model should be tested on multiple machines.

### 3.4 Controller Construction

The base of this thesis lies in the construction of an NN as a feedforward controller. This chapter explains the construction of the controller and accompanying information. The trained NN was inserted in the control loop in the same manner as explained in 2.2, where the feedforward controller was integrated to improve reference tracking, and the reference was velocity demand. There was one GRU-based network trained for each controlled joint. A block diagram of the construction can be viewed in Figure 3.3.

**Figure 3.3:** Feedforward controller construction using the NN, with feedback

The block diagram of the controller can be seen in Figure 3.4.

**Figure 3.4:** Currently used feedforward controller construction, with feedback

### 3.4.1 Signal Design

The robotic arm's control system translates desired velocities, forming the trajectory, into electrical currents that drive the hydraulics of the robotic arm. To effectively identify the system dynamics, it was necessary to excite the arm with a broad range of input currents that induced diverse joint motions. A common approach utilizes a series of simple step changes in current. However, this method would require a significant number of steps to adequately capture the arm's response a cross its operating range. An alternative strategy, a randomized low-frequency chirp signal incorporating steps of varying magnitudes and duration's, was implemented instead. This signal effectively excited the robotic arm across a wide spectrum of operating conditions, stimulating diverse joint motions and capturing a comprehensive range of system behaviors. These signals were directly sent to each joint of the VMS to excite the system. Figure 3.5 visually depicts the generated excitation signals applied to the robotic arm joints.

### 3.4.2 Data gathering

The data gathering process involved utilizing the robotic arm itself. As described in 3.4.1, the input signals to the robotic arm were currents, and the corresponding outputs were velocities of each joint, which made up the trajectory. An established MATLAB interface was used to connect to the VMS and enable application of the constructed signal (described in 3.4.1) to the robot. This same interface facilitated the collection and archiving of data for each joint, including the input current, velocity,

**Figure 3.5:** Structure of chirp signal used, for a single joint

and corresponding timestamp. A large amount of data points were collected for the training phase.

### 3.4.3 Selection of Architecture

There are several NN architectures to choose from, however the one chosen for this thesis was a GRU network. Previous research, as mentioned in 2.6 in the field of system identification, namely in [25] [26] and [27], heavily pointed towards GRU being an optimal choice as it tends to perform as well or better, when compared to an LSTM architecture. When examining the equations of the two different RNN models in 2.5.1 and 2.5.2, it is noted that the amount of equations making up the two models differ, with LSTM models containing more complexity with an example being the forget gate, that GRU models don't possess. The less complexity of the GRU networks should equate to faster inference, which is preferred when working with real time control and control systems with high control frequencies. Adding to this is the usage of such a model for each joint, leading to inference times being multiplied by the number of controlled joints.

For the structure of the NN, a hyperparameter tuning strategy, *Random Search,* was employed to explore different combinations of hyperparameters (number of layers, neurons, dropout rate, learning rate etc). As explained in 2.7, when budget and time is of the essence as is the case, *Random Search* offer better alternative for finding a good optimum. Each combination was used to train a separate NN model. The model performance on the validation set, evaluated using the MSE metric in regards to the validation loss, was used to identify the best performing configuration, that was later chosen.

### 3.4.4 Training the Neural Network

The collected input and output data from 3.4.2 were pre-processed for the NN. This included filtering of the signal and splitting the data into training and validation sets.

Next was the training loop, which iterated through epochs, where each epoch involved:

- Forward pass: Propagating the input data through the network to obtain the predicted output.

- Loss calculation: Employing a loss function, in this case an Mean Squared Error (MSE) to evaluate the difference between the predicted and actual output.

- Backward pass: Backpropagating the calculated loss to compute gradients for each network parameter (weights and biases).

- Parameter update: Utilizing the Adam optimizer to update the network parameters based on the calculated gradients.

These steps were performed for each combination of hyperparameters, utilizing the *Random Search* method, until the budget ran out.

### 4 Results and analysis

The following chapter presents the results of the thesis. the results are based on the data gathered from the experiment in 3. The data gathered will be presented and statistically analysed, and in later chapters the implications will be discussed.

### 4.1 Data

The data gathered in the experiment was collected as stated in the experimental design section 3.4.2. The amount of samples collected was based on a power test and the resulting distribution of the samples for both of the controllers can be seen below. To confirm that the data was normally distributed a Shapiro-Wilk test was conducted on the pilot experiment, the results indicated that a log10 transform of the data made it better fit a normal distribution, making it more suitable for the analytical tests such as the t-test used in this thesis, as the test assumes a normal distribution.

**Figure 4.1:** Histogram over log10(MSE) for the GRU-based feedforward controller and the currently used controller

### 4.2 T-Test

A t-test was conducted between the two distributions found in the Figure 4.1. Where the null- and alternative hypothesis as stated in Section 3.2.2 were:

- **HO:** There is no difference in mean in mean squared velocity error between the current feedforward controller and the GRU-based feedforward controller
- **H1:** There is a difference in mean in mean squared velocity error between the current feedforward controller and the GRU-based feedforward controller

The t-test was conducted with the help of **RStudio** where the p-value was recorded as *p-value = 3.804e-14,* the t-value was recorded as *t-value = 8.3876* and a mean of the log10 transformed data of *-4.894181* and *-4.570004,* with the difference landing within the 95 % confidence interval, with the interval not including 0.

### 4.2.1 Results Interpretation

The results and the means are transformed with log10, which should be taken into account when examining and interpreting the results.

**t-value:** The t-value indicates the size of the difference relative to the variation in the sample data. A value of *8.3876* is considered high, giving an indication to a statistically significant difference between the means between the two controllers.

**p-value:** The p-value of *3.804e-14* is a lot lower than the significance level of *0.05.* The low p-value gives strong evidence against the **H0,** making it possible to reject **H0** and accept **H1**. Accepting that there is a difference in mean in the MSE between the current feedforward controller and the GRU-based feedforward controller.

**Confidence interval:** A s *0* is not included in the confidence interval further supports the rejection of **H0,** as it suggests that the true difference in means is entirely separated from *0*. If *0* would fall within the confidence interval it would suggest that the difference between the means might be zero.

**Difference in mean:** The difference in mean is in the form of the log10 transform of the actual mean, where the values were *-4.894181* for the GRU-based controller and *-4.570004* for the currently used feedforward controller. This gives a difference of 7.09 % for the log10 transformed values. The real difference in means can be calculated by the inverse of a log10 transformation, which gives the values *1e-4.894181* and *1e-4.570004.* Calculating the real difference resulted in a difference between the real means of 109.5 %. Indicating a substantial difference, where the GRU-based feedforward controller had the lower MSE. Where a histogram of the real (non log10 transformed) distribution can be found below.

**Histogram of MSE for the two feedforward controllers**

**Figure 4.2:** Histogram over MSE for the GRU-based feedforward controller and the currently used controller

Several studies cited in the related works section, such as those by A. Rehmer and A. Kroll [25], and V. Shopov and V. Markova [26], have demonstrated the applicability of RNNs, including GRU models, for system identification and control t asks. These studies highlight the suitability of GRU networks for modeling complex dynamics in non-linear systems, which aligns with the findings of this thesis where GRU-based feedforward controller effectively minimized the MSE for velocity trajectory tracking within the Delaval VMS and its hydraulic actuators. These results seem to be aligned with similar studies where RNNs were used to increase tracking precision such as in the studies by R. Zhou et al. [27] and S. Xie and J. Ren [28]. Zhou et al.'s study noted that they experienced a high frequency vibration component that affected their GRU models accuracy, this phenomenon was not noticed during this study.

### 5 Discussion

The findings in this thesis suggest that GRU-based feedforward controllers can significantly improve the accuracy in trajectory tracking for a hydraulic robotic arm. The results in 4.2.1 **(Difference in mean)** show an observed difference of *109.5 %* in the MSE in the velocity tracking between the currently used feedforward controller and the GRU-based feedforward controller for the Delaval VMS's robotic arm utilising linear electro-hydraulic actuators for its movements. Answering the research question as stated in 1.3.1 beeing:

- How does the currently used controller compare to the newly designed feedforward controller using a NN, in terms of velocity error?

The newly constructed controller beeing a GRU-based feedforward controller, which achieved a statistically significant difference in MSE for velocity trajectories compared to the currently used controller. This aligns well with previous research such as the study by S. Xie and J. Ren [28], where they also achieved good tracking results for other actuators with non-linear properties. The ability of GRU-networks to learn behaviors of underlying systems is linked to the ability of NNs to act as universal approximators as stated in the paper [17]. The ability of different Recurrent NNs to model actuators and systems, including non-linear systems such as in the studies [26] [28], is further added upon with this study as the GRU-network has estimated the system response for a specific input for three non-linear dynamic systems working in conjunction in the robotic arm of the VMS.

### 5.1 Examining Trajectories

Examining a snapshot of trajectories for one actuator, with varying trajectory max speed, some common patterns emerged. These observations were not further studied due to time constraints, meaning these observations should not be taken for as fact as it is a small sample size. To ensure the validity of these statements further tests should be conducted. It was noted that the GRU-based feedforward controller seems to oscillate more than the currently used controller. This can be observed in the velocity trajectories in Figure 5.1, which shows the actual and demanded trajectories for the controllers. The graphs in Figure 5.1 have similar trajectory velocities between the two different controllers, with three different trajectory velocities being shown. Due to business secrets, some details about the trajectories are omitted, and the units regarding times and velocities will not be in the following graphs.

**Figure 5.1:** Plotting of trajectory following, current feedforward (Left) and GRU-based feedforward (Right) together with their respective feedback controller. Orange is demanded trajectory while blue is actual trajectory

Due to the oscillating behaviour seen in some samples of the GRU-networks outputs in Figure 5.1, each of the trajectories was further examined, with the output (joint input) from only the GRU feedforward part without feedback plotted below in Figure 5.2. When examining the output from both the feedback controller and the GRU-networks model, the oscillating behavior was not seen in the GRU-models output but rather the feedback controller. However, these observations should not be taken for fact as they are based on few samples of outputs. It should be noted that with a complex machine like the Delaval VMS, unknown interaction effects might be what propagates the observed behavior, or a bad compatibility between the feedback controller and the GRU-based feedforward controller.

**Figure 5.2:** Plotting of outputs from GRU-based feedforward without feedback for the velocity trajectories in Figure 5.1

## 5.2 Contributions to Practise

The improvements in trajectory tracking observed in this thesis position GRU-based models as viable alternatives to white-box/gray-box modelled feedforward controllers. By estimating the inverse system response, GRU-based models enable the construction of feedforward controllers for complex or non-linear systems, offering a viable alternative to white-box/gray-box modelled controllers. The results of this thesis adds to the previous research [27] [28] and proves the applicability of RNN networks in the robotic control domain.

## 5.3 Experimental Constraints

While the results are promising, they are derived from controlled experimental conditions that may not fully capture the complexities of real-world operations. The oscillatory behaviors observed in higher speed trajectories and the absence of high-frequency vibration impacts noted by R. Zhou et al. [27] suggest that further research is needed to understand the GRU-based controller's performance in varied operational contexts. Due to limitation of the Delaval VMS as a machine operated in close proximity to animals, it is limited in the speed able to be operated at, meaning that the speed of operation is limited, which should be kept in mind for the application of the GRU-based controller in this specific c ase. Additionally if the trained model would be operated outside the range of the training data, the performance of it can not be certain.

### 5.4 Sustainability & Ethical Considerations

NNs are considered black box models as explained in Section 2.3, which is also true for GRU NN models. This can be a source of concern in safety critical systems as the predictability of such models are uncertain. The opaque nature of NN models and in turn GRU models, makes it difficult to fully grasp how the models decisions are being made. The reliance of such models requires rigorous testing on validation to ensure they behave as expected during every conceivable circumstance. With robots operating in close proximity with animals and humans, the demands on rigorous testing will increase to ensure no potentially dangerous situations occur.

### 6 Conclusion

This thesis has demonstrated the potential of GRU-based feedforward controllers to enhance trajectory tracking in hydraulic robotic arms, with the implemented GRU-based feedforward controller minimizing the mean squared error in velocity trajectories for the Delaval VMS's robotic arm. The GRU-based controller feedforward controller decreased the mean MSE by 109.5 % compared to the currently used solution. Showcasing the capability of NNs especially GRU-networks ability to handle non-linear behaviours present in the electro-hydraulic actuators in the robotic arm of the VMS. Where the key findings are listed bellow.

- **Improved trajectory tracking:** The GRU-based feedforward controller decreased mean MSE compared to the currently used feedforward controller by *109.5 %*

- **Validation of NNs as universal approximators:** The success of the GRU model in this application supports the theory that NNs can effectively approximate complex functions and systems and adds to the previous research with yet another non-linear system application within the robotic control domain.

### References

[1] M. Tremblay et al., "Factors associated with increased milk production for automatic milking systems," en, J Dairy Sci, vol. 99, no. 5, pp. 3824-3837, Feb. 2016.

[2] H. Barkema et al., "Invited review: Changes in the dairy industry affecting dairy cattle health and welfare," Journal of Dairy Science, vol. 98, no. 11, pp. 7426-7445, 2015, ISSN: 0022-0302. DOI: https://doi.org/10.3168/jds. 2015-9377. [Online]. Available: https://www.sciencedirect.com/science/ article/pii/S0022030215006177.

[3] A. Cogato, M. Brščić, H. Guo, F. Marinello, and A. Pezzuolo, "Challenges and Tendencies of Automatic Milking Systems (AMS): A 20-Years Systematic Review of Literature and Patents," en, Animals, vol. 11, no. 2, p. 356, Jan. 2021, ISSN: 2076-2615. DOI: 10.3390/ani11020356. [Online]. Available: https: //www.mdpi.com/2076-2615/11/2/356 (visited on Apr. 27, 2023).

[4] A. Mohanty and B. Yao, "Indirect adaptive robust control of hydraulic manipulators with accurate parameter estimates," IEEE Transactions on Control Systems Technology, vol. 19, no. 3, pp. 567-575, 2011. DOI: 10.1109/ TCST.2010.2048569.

[5] R. Mukhopadhyay, R. Chaki, A. Sutradhar, and P. Chattopadhyay, "Model learning for robotic manipulators using recurrent neural networks," in TENCON 2019 - 2019 IEEE Region 10 Conference (TENCON), 2019, pp. 2251-2256. DOI: 10.1109/TENCON.2019.8929622.

[6] S. Chen and J. T. Wen, "Neural-learning trajectory tracking control of flexible-joint robot manipulators with unknown dynamics," in 2019 IEEE/RSJ International Conference on Intelligent Robots and Systems (IROS), 2019, pp. 128-135. DOI: 10.1109/IROS40897.2019.8968608.

[7] J. Iqbal, R. U. Islam, H. Khan, et al., "Modeling and analysis of a 6 dof robotic arm manipulator," Canadian Journal on Electrical and Electronics Engineering, vol. 3, no. 6, pp. 300-306, 2012.

[8] A. Okubanjo, O. Oyetola, M. Osifeko, O. Olaluwoye, and P. Alao, "Modeling of 2-dof robot arm and control," Futo J Series (FUTOJNLS), vol. 3, no. 2, pp. 80-92, 2017.

[9] H. Al-Qahtani, A. A. Mohammed, and M. Sunar, "Dynamics and control of a robotic arm having four links," Arabian Journal for Science and Engineering, vol. 42, pp. 1841-1852, 2017.

[10] L. Liu, S. Tian, D. Xue, T. Zhang, and Y. Chen, "Industrial feedforward control technology: A review," Journal of Intelligent Manufacturing, vol. 30, pp. 2819-2833, 2019.

[11] K. Keesman, "System identification: An introduction," in (Advanced Textbooks in Control and Signal Processing), Advanced Textbooks in Control and Signal Processing. Springer London, 2011, p. 12, ISBN: 9780857295224. [Online]. Available: https: //books.google.se/books?id=gHssIP_dDwUC.

[12] J. Sjöberg et al., "Nonlinear black-box modeling in system identification: A unified overview," Automatica, vol. 31, no. 12, pp. 1691-1724, 1995, Trends in System Identification, ISSN: 0005-1098. DOI: https: //doi.org/10.1016/0005-1098(95) 00120-8. [Online]. Available: https: //www.sciencedirect.com/ science/article/-pii/0005109895001208.

[13] D. Zhang, Q. He, P. Hao, and H. Zhang, "Modeling and controlling for hydraulic excavator's arm," in 22nd International Symposium on Automation and Robotics in Construction (ISARC), Ferrara (Italy), Citeseer, 2005, pp. 1-7.

[14] M. Schüssler, T. Münker, and O. Nelles, "Deep recurrent neural networks for nonlinear system identification," in 2019 IEEE Symposium Series on Computational Intelligence (SSCI), 2019, pp. 448-454. DOI: 10 . 1109 / SSCI44817.2019.9003133.

[15] J. Vuojolainen, N. Nevaranta, R. Jastrzebski, and O. Pyrhönen, "Comparison of excitation signals in active magnetic bearing system identification," 2017.

[16] P. C. Schulze, J. Miller, D. H. Klyde, C. D. Regan, and N. Alexandrov, "System identification of a small uas in support of handling qualities evaluations," in AIAA Scitech 2019 Forum, 2019, p. 0826.

[17] K. Hornik, M. Stinchcombe, and H. White, "Multilayer feedforward networks are universal approximators," Neural Networks, vol. 2, no. 5, pp. 359-366, 1989, ISSN: 0893-6080. DOI: https://doi.org/10.1016/0893-6080(89) 90020-8. [Online]. Available: https://www.sciencedirect.com/science/article/ pii/0893608089900208.

[18] S.-M. Chen and W. Pedrycz, Deep Learning: Algorithms and Applications. Springer, 2020.

[19] A. Rehmer and A. Kroll, "On the vanishing and exploding gradient problem in gated recurrent units," IFAC-PapersOnLine, vol. 53, no. 2, pp. 1243-1248, 2020, 21st IFAC World Congress, ISSN: 2405-8963. DOI: https://doi. org/10.1016/ j.ifacol.2020.12.1342. [Online]. Available: https://www.sciencedirect. com/science/article/-pii/S2405896320317481.

[20] S. Hochreiter and J. Schmidhuber, "Long short-term memory," Neural Computation, vol. 9, no. 8, pp. 1735-1780, 1997. DOI: 10.1162/neco.1997.9. 8.1735.

[21] J. Chung, C. Gulcehre, K. Cho, and Y. Bengio, Empirical evaluation of gated recurrent neural networks on sequence modeling, 2014. arXiv: 1412 . 3555 [cs.NE].

[22] K. Cho et al., Learning phrase representations using rnn encoder-decoder for statistical machine translation, 2014. arXiv: 1406.1078 [cs.CL].

[23] J. Kongthon, Tracking improvements for nonlinear systems using inversion-based feedforward control and feedback control: A robotic arm example, 2020.

[24] J. Micheal, M. Rahmat, N. A. Wahab, and W. Lai, "Feed forward linear quadratic controller design for an industrial electro hydraulic actuator system with servo valve," International Journal on Smart Sensing and Intelligent Systems, vol. 6, no. 1, pp. 154-170, 2013. DOI: doi:10.21307/ijssis-2017-533. [Online]. Available: https://doi.org/10.21307/ijssis-2017-533.

[25] A. Rehmer and A. Kroll, "On using gated recurrent units for nonlinear system identification," in 2019 18th European Control Conference (ECC), IEEE, 2019, pp. 2504-2509.

[26] V. Shopov and V. Markova, "Identification of non-linear dynamic system," in 2019 International Conference on Information Technologies (Info Tech), IEEE, 2019, pp. 1-3.

[27] R. Zhou, C. Hu, B. Hou, and Y. Zhu, "Comparative study of performance-oriented feedforward compensation strategies for precision mechatronic motion systems," IEEE Access, vol. 10, pp. 100812-100823, 2022. DOI: 10.1109/ACCESS.2022. 3207162.

[28] S. Xie and J. Ren, "Recurrent-neural-network-based predictive control of piezo actuators for precision trajectory tracking," in 2019 American Control Conference (ACC), 2019, pp. 3795-3800. DOI: 10.23919/ACC.2019.8814625.

[29] R. Mukhopadhyay, R. Chaki, A. Sutradhar, and P. Chattopadhyay, "Model learning for robotic manipulators using recurrent neural networks," in TENCON 2019 - 2019 IEEE Region 10 Conference (TENCON), 2019, pp. 2251-2256. DOI: 10.1109/TENCON.2019.8929622.

[30] D. Bazzi, C. Messeri, A. M. Zanchettin, and P. Rocco, "Identification of robot forward dynamics via neural network," in 2020 4th International Conference on Automation, Control and Robots (ICACR), IEEE, 2020, pp. 13-21.

[31] T. Yu and H. Zhu, "Hyper-parameter optimization: A review of algorithms and applications," arXiv preprint arXiv:2003.05689, 2020.

[32] M. Feurer and F. Hutter, "Hyperparameter optimization," Automated machine learning: Methods, systems, challenges, pp. 3-33, 2019.

[33] J. Bergstra and Y. Bengio, "Random search for hyper-parameter optimization.," Journal of machine learning research, vol. 13, no. 2, 2012.

[34] A. Dean, D. Voss, and D. Draguljić, Design and Analysis of Experiments (Springer Texts in Statistics), eng, 2nd ed. 2017. Cham: Springer International Publishing, 2017, ISBN: 3-319-52250-7.

## Claims

1. A controller (100) for controlling a milking robot (150) to move an end-effector (390) in at least one dimension (x, y, z) to a desired position ($p_{set}$) according to a desired velocity profile, the controller (100) comprising:

   a feedforward module (110) configured to obtain a set vector ($v_{set}$) specifying the desired velocity profile, and based on the set vector ($v_{set}$) produce at least one predicted control signal ($c_{pred}$);
   a closed-loop controller (120) configured to obtain a modified position ($\Delta p$) and based thereon produce at least one primary control signal ($c_{prim}$) for controlling the end-effector (390) to the desired position ($p_{set}$);
   a first summation module (130) configured to derive at least one modified control signal ($c_{input}$) based on the at least one primary control signal ($c_{prim}$) and the at least one predicted control signal ($c_{pred}$), which at least one modified control signal ($c_{input}$) is adapted to be fed to the milking robot (150) for controlling the end-effector (390) to the desired position ($p_{set}$) according to the desired velocity profile; and
   a second summation module (140) configured to derive the modified position ($\Delta p$) based on the desired position ($p_{set}$) and at least one output signal ($p_{out}$) from the milking robot (150), which at least one output signal ($p_{out}$) reflects a registered position of the end-effector (390),

   **characterized in that** the feedforward module (110) comprises a trained artificial neural network, ANN, which comprises:

an input layer configured to obtain the set vector ($v_{set}$),

an output layer configured to provide the at least one predicted control signal ($c_{pred}$), and

a number of hidden layers interconnecting the input layer and the output layer, each of the input, output and hidden layers comprising a respective set of nodes connected to nodes to the respective of neighboring layers via a respective weight having been assigned through a training process in which the at least one output signal ($p_{out}$) was used as training data and registered control signals ($c_{reg}$) configured to control the end-effector (390) of the milking robot (150) were used as reference data.

2. The controller (100) according to claim 1, wherein the weights of the trained ANN have been determined iteratively via a backpropagation training process ({P}) comprising:

comparing training data that express the registered control signals ($c_{reg}$) with the at least one predicted control signal ($c_{pred}$') produced by an ANN under training (110'), which ANN under training (110') represents the trained ANN after that the training process has been completed.

3. The controller (100) according to any of claims 1 or 2, wherein the number of hidden layers is between two and six, preferably three or four.

4. The controller (100) according to any of the preceding claims, wherein the backpropagation training process ({P}) comprises 400 to 1600 epochs, preferably around 800 to 1000 epochs.

5. The controller (100) according to any of the preceding claims, wherein the desired position ($p_{set}$) and the set vector ($v_{set}$) respectively further describe a trajectory (TJ) to be followed by for the end-effector (390).

6. The controller (100) according to claim 5, wherein the set vector ($v_{set}$) describes a velocity for the end-effector (390), which velocity varies from a start position ($p_{start}$) to the desired position ($p_{set}$).

7. The controller (100) according to claim 6, wherein the set vector ($v_{set}$) describes the velocity for the end-effector (390) such that the end-effector (390) accelerates during a first period from the start position ($p_{start}$) and decelerates towards the desired position ($p_{set}$) during a second period.

8. The controller (100) according to claim 7, wherein the set vector ($v_{set}$) describes a constant velocity for the end-effector (390) between an expiry of the first period and before a beginning of the second period.

9. The controller (100) according to any of the preceding claims, wherein the trained ANN is a recurrent neural network.

10. The controller (100) according to any one of the preceding claims, wherein the trained ANN is implemented by means of a computer program run on at least one processing unit (451).

11. The controller (100) according to any of claims 1 to 8, wherein the trained ANN is implemented on at least one neuromorphic circuit.

12. The controller (100) according to any one of the preceding claims, wherein the closed-loop controller (120) is configured to operate according to a proportional-integral-derivative regulation principle, a linear-quadratic regulation principle or a model predictive control principle.

13. The controller (100) according to any one of the preceding claims, wherein the at least one modified control signal ($c_{input}$) is adapted to control a milking robot (150) with a robotic arm comprising at least three controllable joints (310, 320, 330, 340, 350, 360).

14. The controller (100) according to any one of the preceding claims, wherein the at least one modified control signal ($c_{input}$) is adapted to control at least one electric motor, at least one electro-hydraulic actuator and/or at least one electro-pneumatic actuator of a robotic arm comprised in the milking robot (150), such that the at least one electric motor, the at least one electro-hydraulic actuator and/or the at least one electro-pneumatic actuator causes at least one controllable joint (310, 320, 330, 340, 350, 360) of the robotic arm to bend, rotate, swivel, revolve and/or displace linearly respectively.

15. The controller (100) according to claim 14, wherein the at least one modified control signal ($c_{input}$) is adapted to cause a respective control current and/or voltage to be produced, which respective control current and/or voltage has such a temporal profile with respect to magnitude and sign and/or is modulated in such a manner that the respective control current and/or voltage operates the at least one electric motor, the at least one electro-hydraulic actuator and/or the electro-pneumatic actuator to mechanically control the at least one controllable joint (310, 320, 330, 340, 350, 360) to bend, rotate, swivel, revolve and/or displace linearly respectively the robotic arm.

16. The controller (100) according to any of claims 14 or 15, wherein the robotic arm is presumed to comprise at least two controllable joints (310, 320, 330, 340, 350, 360), and the at least one modified control signal ($c_{input}$) is configured to cause the respective control current to be fed to the at least one electric motor, the at least one electro-hydraulic actuator and/or the electro-pneumatic actuator of the robotic arm such that each of the at least two controllable joints (310, 320, 330, 340, 350, 360) is controlled separately.

17. The controller (100) according to any one of the preceding claims, wherein the end-effector (390) comprises at least one of:

   a teatcup,
   a teatcup gripper,
   a teat cleaning unit
   a teatcup cleaning unit, and
   a camera unit.

18. A computer-implemented method for controlling a milking robot (150) to move an end-effector (390) in at least one dimension (x, y, z) to a desired position ($p_{set}$) according to a desired velocity profile, the method comprising:

   obtaining, in a feedforward module (110), a set vector ($v_{set}$) specifying the desired velocity profile,
   producing, based on the set vector ($v_{set}$), at least one predicted control signal ($c_{pred}$);
   obtaining, in a closed-loop controller (120), a modified position ($\Delta p$);
   producing, based on the modified position ($\Delta p$), at least one primary control signal ($c_{prim}$) for controlling the end-effector (390) to the desired position ($p_{set}$);
   deriving, in a first summation module (130), at least one modified control signal ($c_{input}$) based on the at least one primary control signal ($c_{prim}$) and the at least one predicted control signal ($c_{pred}$), which at least one modified control signal ($c_{input}$) is adapted to be fed to the milking robot (150) for controlling the end-effector (390) to the desired position ($p_{set}$) according to the desired velocity profile; and
   deriving, in a second summation module (140), the modified position ($\Delta p$) based on the desired position ($p_{set}$) and at least one output signal ($p_{out}$) from the milking robot (150), which at least one output signal ($p_{out}$) reflects a registered position of the end-effector (390),

   **characterized by** the feedforward module (110) comprising a trained artificial neural network, ANN, which comprises:

   an input layer configured to obtain the set vector ($v_{set}$),
   an output layer configured to provide the at least one predicted control signal ($c_{pred}$), and
   a number of hidden layers interconnecting the input layer and the output layer, each of the input, output and hidden layers comprising a respective set of nodes connected to nodes to the respective of neighboring layers via a respective weight having been assigned through a training process in which the at least one output signal ($p_{out}$) was used as training data and registered control signals ($c_{reg}$) configured to control the end-effector (390) of the milking robot (150) were used as reference data.

19. A computer program (453) loadable into a non-volatile data carrier (455) communicatively connected to a processing unit (451), the computer program (453) comprising software for executing the method according to claim 18 when the computer program (453) is run on the processing unit (451).

20. A non-volatile data carrier (455) containing the computer program (453) of the claim 19.

**Fig. 1**

**Fig. 2**

**Fig. 3**

100

451    455    453

SV$_{set}$ →

→ C$_{input}$

**Fig. 4**

START

510
Desired position and
velocity profile received?
No

Yes

530
Obtain desired and
modified positions

520
Produce at least one predicted con-
trol signal based on velocity profile

540
Produce at least one primary control signal

550
Obtain at least one output signal from milking robot

560
Derive modified position based on the at least
one output signal and the desired position

570
Produce at least one control signal to milking robot based on the
modified position and the at least one predicted control signal

END

**Fig. 5**

**EUROPEAN SEARCH REPORT**

Europäisches
Patentamt
European
Patent Office
Office européen
des brevets

**Application Number**

EP 25 17 9102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2014 006566 A (INST NAT COLLEGES TECH JAPAN) 16 January 2014 (2014-01-16) | 1-10,12, 17-20 | INV. B25J9/16 |
| Y | * the whole document * | 11 | G05B19/416 |
| A | | 13-16 | G06N3/044 |
| | ----- | | G06N3/084 |
| X | ER M J ET AL: "CONTROL OF ADEPT ONE SCARA ROBOT USING NEURAL NETWORKS", IEEE TRANSACTIONS ON INDUSTRIAL ELECTRONICS, IEEE SERVICE CENTER, PISCATAWAY, NJ, USA, vol. 44, no. 6, 1 December 1997 (1997-12-01), pages 762-768, XP000750719, ISSN: 0278-0046, DOI: 10.1109/41.649936 | 1,13-16 | G05B13/02 |
| A | * the whole document * | 2-12, 17-20 | |
| | ----- | | |
| Y | HELFERTY J J ET AL: "NEUROMORPHIC CONTROL OF ROBOTIC MANIPULATORS", PROCEEDINGS OF THE INTERNATIONAL CONFERENCE ON ROBOTICS AND AUTOMATION SACRAMENTO, APR. 9 - 11, 1991; [PROCEEDINGS OF THE INTERNATIONAL CONFERENCE ON ROBOTICS AND AUTOMATION], LOS ALAMITOS, IEEE COMP. SOC. PRESS, US, vol. CONF. 7, 9 April 1991 (1991-04-09), pages 2436-2441, XP000220936, DOI: 10.1109/ROBOT.1991.131989 ISBN: 978-0-8186-2163-5 | 11 | |
| A | * the whole document * | 1-10, 12-20 | |

**TECHNICAL FIELDS SEARCHED (IPC)**

B25J
G06N
G05B

-/--

The present search report has been drawn up for all claims

| Place of search | Date of completion of the search | Examiner |
|---|---|---|
| The Hague | 17 October 2025 | Zake, Zane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 17 9102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | J White: "DESIGN OF A ROBOTIC MANIPULATOR FOR AUTOMATIC APPLICATION OF MILKING CUPS", Master of Engineering thesis, 25 February 2006 (2006-02-25), pages 1-242, XP055253528, Retrieved from the Internet: URL:http://doras.dcu.ie/16974/1/james_white_SC.pdf [retrieved on 2016-02-26] * the whole document * ----- | 1-20 | |

TECHNICAL FIELDS
SEARCHED      (IPC)

The present search report has been drawn up for all claims

| Place of search | Date of completion of the search | Examiner |
|---|---|---|
| The Hague | 17 October 2025 | Zake, Zane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 25 17 9102

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2025

| Patent document cited in search report | Publication date | Patent family member(s) | Publication date |
|---|---|---|---|
| JP 2014006566 A | 16-01-2014 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. ZHOU** ; **C. HU** ; **B. HOU** ; **Y. ZHU**. Comparative study of performance-oriented feedforward compensation strategies for precision mechatronic motion systems,. *IEEE Access*, 2022, vol. 10, 100 812-100 823
- **R. MUKHOPADHYAY** ; **R. CHAKI** ; **A. SUTRADHAR** ; **P. CHAT-TOPADHYAY**. Model learning for robotic manipulators using recurrent neural networks,. *TEN-CON 2019 - 2019 IEEE Region 10 Conference (TENCON)*, 2019, 2251-2256
- **S. CHEN** ; **J. T. WEN**. Neural-learning trajectory tracking control of flexible-joint robot manipulators with unknown dynamics,. *2019 IEEE/RSJ International Conference on Intelligent Robots and Systems (IROS)*, 2019, 128-135
- **S. XIE** ; **J. REN**. ecurrent-neural-network-based predictive control of piezo actuators for precision trajectory tracking. *2019 American Control Conference (ACC)*, 2019, 3795-3800
- **M. TREMBLAY et al.** actors associated with increased milk production for automatic milking systems. *J Dairy Sci,*, February 2016, vol. 99 (5), 3824-3837
- **H. BARKEMA et al.** Invited review: Changes in the dairy industry affecting dairy cattle health and welfare. *ournal of Dairy Science*, 2015, vol. 98 (11), ISSN 0022-0302, 7426-7445, https://www.sciencedirect.com/science/ article/pii/S0022030215006177
- **H. GUO** ; **F. MARINELLO** ; **A. PEZZUOLO**. Challenges and Tendencies of Automatic Milking Systems (AMS): A 20-Years Systematic Review of Literature and Patents. *Animals*, January 2021, vol. 11 (2), ISSN 2076-2615, 356, https: //www.mdpi.com/2076-2615/11/2/356
- **A. MOHANTY** ; **B. YAO**. Indirect adaptive robust control of hydraulic manipulators with accurate parameter estimates. *IEEE Transactions on Control Systems Technology,*, 2011, vol. 19 (3), 567-575
- **R. MUKHOPADHYAY** ; **R. CHAKI** ; **A. SUTRADHAR** ; **P. CHATTOPADHYAY**. Model learning for robotic manipulators using recurrent neural networks. *EN-CON 2019 - 2019 IEEE Region 10 Conference (TENCON)*, 2019, 2251-2256
- **S. CHEN** ; **J. T. WEN**. Neural-learning trajectory tracking control of flexible-joint robot manipulators with unknown dynamics. *2019 IEEE/RSJ International Conference on Intelligent Robots and Systems (IROS),*, 2019, 128-135
- **J. IQBAL** ; **R. U. ISLAM** ; **H. KHAN et al.** Modeling and analysis of a 6 dof robotic arm manipulator. *Canadian Journal on Electrical and Electronics Engineering*, 2012, vol. 3 (6), 300-306
- **A. OKUBANJO** ; **O. OYETOLA** ; **M. OSIFEKO** ; **O. OLALUWOYE** ; **P. ALAO**. Modeling of 2-dof robot arm and control. *Futo J Series (FUTOJNLS)*, 2017, vol. 3 (2), 80-92
- **H. AL-QAHTANI** ; **A. A. MOHAMMED** ; **M. SUNAR**. Dynamics and control of a robotic arm having four links. *Arabian Journal for Science and Engineering*, 2017, vol. 42, 1841-1852
- **L. LIU** ; **S. TIAN** ; **D. XUE** ; **T. ZHANG** ; **Y. CHEN**. Industrial feedforward control technology: A review. *Journal of Intelligent Manufacturing*, 2019, vol. 30, 2819-2833
- System identification: An introductio. **K. KEESMAN**. Advanced Textbooks in Control and Signal Processing. Springer, 2011, 12
- **J. SJÖBERG et al.** Nonlinear black-box modeling in system identification: A unified overview. *Automatica*, 1995, vol. 31 (12), ISSN 0005-1098, 1691-1724, https: //www.sciencedirect.com/ science/article/-pii/0005109895001208
- **D. ZHANG** ; **Q. HE** ; **P. HAO** ; **H. ZHANG**. Modeling and controlling for hydraulic excavator's arm. *22nd International Symposium on Automation and Robotics in Construction (ISARC), Ferrara (Italy),*, 2005, 1-7
- **M. SCHÜSSLER** ; **T. MÜNKER** ; **O. NELLES**. Deep recurrent neural networks for nonlinear system identification. *019 IEEE Symposium Series on Computational Intelligence (SSCI)*, 2019, 448-454
- **J. VUOJOLAINEN** ; **N. NEVARANTA** ; **R. JASTR-ZEBSKI** ; **O. PYRHÖNEN**. *Comparison of excitation signals in active magnetic bearing system identification*, 2017
- **P. C. SCHULZE** ; **J. MILLER** ; **D. H. KLYDE** ; **C. D. REGAN** ; **N. ALEXANDROV**. System identification of a small uas in support of handling qualities evaluations. *AIAA Scitech 2019 Forum,,*, 2019, 0826

- **K. HORNIK** ; **M. STINCHCOMBE** ; **H. WHITE**. Multilayer feedforward networks are universal approximators. *eural Networks*, 1989, vol. 2 (5), ISSN 0893-6080, 359-366, https://www.sciencedirect.com/science/article/ pii/0893608089900208
- **S.-M. CHEN** ; **W. PEDRYCZ**. Deep Learning: Algorithms and Applications. Springer, 2020
- **A. REHMER** ; **A. KROLL**. On the vanishing and exploding gradient problem in gated recurrent units. *FAC-PapersOnLine*, 2020, vol. 53 (2), ISSN 2405-8963, 1243-1248, https://www.sciencedirect.com/science/article/pii/S2405896320317481
- **S. HOCHREITER** ; **J. SCHMIDHUBER**. Long short-term memory. *Neural Computation*, 1997, vol. 9 (8), 1735-1780
- **J. CHUNG** ; **C. GULCEHRE** ; **K. CHO** ; **Y. BENGIO**. Empirical evaluation of gated recurrent neural networks on sequence modeling,. *arXiv: 1412*, 2014, 3555
- **K. CHO et al.** Learning phrase representations using rnn encoder-decoder for statistical machine translation. *arXiv: 1406*, 2014, 1078
- **J. KONGTHON**. *Tracking improvements for non-linear systems using inversion-based feedforward control and feedback control: A robotic arm example*, 2020
- **J. MICHEAL** ; **M. RAHMAT** ; **N. A. WAHAB** ; **W. LAI**. Feed forward linear quadratic controller design for an industrial electro hydraulic actuator system with servo valve. *International Journal on Smart Sensing and Intelligent Systems*, 2013, vol. 6 (1), 154-170, https://doi.org/10.21307/ijssis-2017-533
- On using gated recurrent units for nonlinear system identification. **A. REHMER** ; **A. KROLL**. 2019 18th European Control Conference (ECC). IEEE, 2019, 2504-2509
- Identification of non-linear dynamic system. **V. SHOPOV** ; **V. MARKOVA**. 2019 International Conference on Information Technologies (Info Tech),. IEEE, 2019, 1-3
- **R. ZHOU** ; **C. HU** ; **B. HOU** ; **Y. ZHU**. Comparative study of performance-oriented feedforward compensation strategies for precision mechatronic motion systems. *IEEE Access,*, vol. 10, 100812-100823
- **S. XIE** ; **J. REN**. Recurrent-neural-network-based predictive control of piezo actuators for precision trajectory tracking. *2019 American Control Conference (ACC),*, 2019, 3795-3800
- **R. MUKHOPADHYAY** ; **R. CHAKI** ; **A. SUTRADHAR** ; **P. CHATTOPADHYAY**. Model learning for robotic manipulators using recurrent neural networks. *TENCON 2019 - 2019 IEEE Region 10 Conference (TENCON)*, 2019, 2251-2256
- Identification of robot forward dynamics via neural network. **D. BAZZI** ; **C. MESSERI** ; **A. M. ZANCHETTIN** ; **P. ROCCO**. 2020 4th International Conference on Automation, Control and Robots (ICACR),. IEEE, 2020, 13-21
- **T. YU** ; **H. ZHU**. Hyper-parameter optimization: A review of algorithms and applications. *arXiv preprint arXiv:2003.05689,*, 2020
- **M. FEURER** ; **F. HUTTER**. Hyperparameter optimization. *utomated machine learning: Methods, systems, challenges*, 2019, 3-33
- **J. BERGSTRA** ; **Y. BENGIO**. Random search for hyper-parameter optimization.. *ournal of machine learning research,*, vol. 3 (2), 2012
- Design and Analysis of Experiments. **A. DEAN** ; **D. VOSS** ; **D. DRAGULJIĆ**. Springer Texts in Statistics. Springer International Publishing, 2017